(19) Europäisches Patentamt
European Patent Office
Office européen des brevets

(11) EP 2 617 084 B1

# (12) EUROPEAN PATENT SPECIFICATION

(45) Date of publication and mention of the grant of the patent:
**13.05.2020 Bulletin 2020/20**

(21) Application number: **11760953.7**

(22) Date of filing: **16.09.2011**

(51) Int Cl.:
***H01M 10/32** (2006.01)* ***H01M 2/16** (2006.01)*
*H01M 4/38 (2006.01)* *H01M 4/42 (2006.01)*
*H01M 4/48 (2010.01)*

(86) International application number:
**PCT/US2011/051864**

(87) International publication number:
**WO 2012/037426 (22.03.2012 Gazette 2012/12)**

## (54) ELECTRODE SEPARATOR

ELEKTRODENSEPARATOR

SÉPARATEUR D'ÉLECTRODES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2010 US 383553 P**
**16.09.2010 US 383519 P**
**16.09.2010 US 383595 P**

(43) Date of publication of application:
**24.07.2013 Bulletin 2013/30**

(60) Divisional application:
**13191477.2 / 2 717 350**

(73) Proprietor: **ZPower, LLC**
**Camarillo, CA 93012 (US)**

(72) Inventors:
- **ADAMSON, George, W.**
  **Princeton Junction, NJ 08550 (US)**
- **SCANLAN, David, John**
  **Ventura, CA 93001 (US)**
- **BISHOP, Sam**
  **Camarillo, CA 93012 (US)**
- **ZHOU, Hongxia**
  **Ann Arbor, MI 48103 (US)**
- **SUN, Ximei**
  **Camarillo, CA 93012 (US)**
- **HUANG, Biying**
  **Fremont, CA 94538 (US)**
- **LIANG, Liang**
  **Yorktown Heights, NY 10598 (US)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**WO-A1-2008/039416** **WO-A1-2008/039417**
**WO-A1-2009/120382** **JP-A- 58 018 870**
**KR-A- 20100 071 941** **US-A1- 2006 046 149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 617 084 B1

## Description

### FIELD OF THE INVENTION

This invention is concerned with electric storage batteries, and in particular, with separators for alkaline batteries and methods of making the same.

### BACKGROUND

An electrical storage battery comprises one electrochemical cell or a plurality of electrochemical cells of the same type, the latter typically being connected in series to provide a higher voltage or in parallel to provide a higher charge capacity than provided by a single cell. An electrochemical cell comprises an electrolyte interposed between and in contact with an anode and a cathode. For a storage battery, the anode comprises an active material that is readily oxidized, and the cathode comprises an active material that is readily reduced. During battery discharge, the anode active material is oxidized and the cathode active material is reduced so that electrons flow from the anode through an external load to the cathode and ions flow through the electrolyte between the electrodes.

Many electrochemical cells used for electrical storage applications also include a separator between the anode and the cathode, which is required to prevent reactants and reaction products present at one electrode from reacting and/or interfering with reactions at the other electrode. To be effective, a battery separator must be electronically insulating and remain so during the life of the battery to avoid battery self-discharge via internal shorting between the electrodes. In addition, a battery separator must be both an effective electrolyte transport barrier and a sufficiently good ionic conductor to avoid excessive separator resistance that substantially lowers the discharge voltage.

WO 2008/039417 A1 describes oxidation-resistant separators for alkaline batteries.

WO 2009/120382 A1 describes further electrode separators. US 2006/0046149 A1 describes organic/inorganic composite porous films and electrochemical devices prepared thereby.

Electrical storage batteries are classified as either "primary" or "secondary" batteries. Primary batteries involve at least one irreversible electrode reaction and cannot be recharged with useful charge efficiency by applying a reverse voltage. Secondary batteries involve relatively reversible electrode reactions and can be recharged with acceptable loss of charge capacity over numerous charge-discharge cycles. Separator requirements for secondary batteries tend to be more demanding, since the separator must survive repeated charge-discharge cycles.

For secondary batteries comprising a highly oxidative cathode, a highly reducing anode, and an alkaline electrolyte, such as zinc-silver oxide batteries, separator requirements are particularly stringent. The separator must be chemically stable in strongly alkaline solution, resist oxidation when in contact with the highly oxidizing cathode, and resist reduction when in contact with the highly reducing anode. Further, since cathode-derived ions, especially metal oxide ions, can be somewhat soluble in alkaline solutions and be chemically reduced to metal on separator surfaces, the separator must also inhibit transport and/or chemical reduction of metal ions. Otherwise, a buildup of metal deposits within separator pores can increase the separator resistance in the short term and ultimately lead to shorting failure due to formation of a continuous metal path through the separator.

In addition, because of the strong tendency of anodes to form dendrites during charging, the separator must suppress dendritic growth and/or resist dendrite penetration to avoid failure due to formation of a dendritic short between the electrodes. A related issue with anodes is shape change, in which the central part of the electrode tends to thicken during charge-discharge cycling. The causes of shape change are complicated and not well-understood but apparently involve differentials in current distribution and solution mass transport along the electrode surface. For instance, in zinc-silver oxide batteries, the separator preferably mitigates zinc electrode shape change by exhibiting uniform and stable ionic conductivity and ionic transport properties.

In order to satisfy the numerous and often conflicting separator requirements for zinc-silver oxide batteries, a separator stack comprised of a plurality of separators that perform specific functions is needed. Some of the required functions are resistance to electrochemical oxidation and silver ion transport from the cathode, and resistance to electrochemical reduction and dendrite penetration from the anode.

Traditional separators decompose chemically in alkaline electrolytes, which limits the useful life of the battery. Traditional separators are also subject to chemical oxidation by soluble silver ions and electrochemical oxidation in contact with silver electrodes. Furthermore, some traditional separators exhibit low mechanical strength and poor resistance to penetration by dendrites.

To solve some of the problems caused by traditional separators, new separator materials have been developed.

### SUMMARY OF THE INVENTION

The present invention provides a separator for use in a silver-zinc rechargeable battery comprising a polymer

material comprising ABS; and a filler comprising a zirconium oxide material, wherein the separator is substantially free of titanium and has a resistivity of no more than 2000 Ohm cm, and wherein the zirconium oxide material comprises from 1 mol% to 10 mol% of yttrium oxide.

In some embodiments, the separator has a pore size of about 5 nm or greater (e.g., about 10 nm or greater, about 15 nm or greater, or about 20 nm or greater). In some embodiments, the polymer material comprises greater than about 5 wt% of ABS (e.g., from about 10 wt% to about 35 wt% or from about 15 wt% to about 30 wt%) by weight of the separator. In some embodiments, the polymer material comprises from about 1 wt% to less than about 50 wt% of ABS (e.g., from about 10 wt% to about 35 wt% or from about 15 wt% to about 30 wt%) by weight of the separator. In some embodiments, the polymer material further comprises a water soluble polymer. For example, the polymer material comprises from about 1 wt% to about 30 wt% of a water soluble polymer (e.g., from about 2.5 wt% to about 10 wt%, from about 4 wt% to about 8 wt%, or from about 5 wt% to about 7 wt%) by weight of the separator. In other examples, the water soluble polymer comprises polyvinylpyrrolidone, polyvinyl alcohol, polyacrylic acid, carbopol, polyethylene glycol, polystyrene sulfonic acid, or any combination thereof. In some embodiments, the separator further comprises greater than about 10 wt% of filler (e.g., from about 10.5 wt% to about 90 wt%, from about 40 wt% to about 90 wt%, or from about 50 wt% to about 85 wt%) by weight of the separator. In other embodiments, the zirconium oxide material comprises a powder having a mean grain diameter of greater than about 30 nm (e.g., from about 40 nm to about 500 nm or from about 45 nm to about 200 nm). According to the claimed invention, the zirconium oxide material comprises from about 1 mol% to about 10 mol% of yttrium oxide. In other embodiments, the filler is substantially free of titanium. In some embodiments, the separator further comprises a dispersant. For example, the separator comprises from about 0.1 wt% to about 9.99 wt% of dispersant (e.g., from about 1 wt% to about 20 wt% or from about 2 wt% to about 10 wt%) by weight of the separator. In some examples, the dispersant comprises dodecylbenzenefulfonic acid or any salt thereof. In some embodiments, the separator further comprises a substrate. In some examples, the substrate comprises a woven or nonwoven film. In other examples, the substrate comprises a polyolefin. For instance, the polyolefin comprises polyethylene, polypropylene, or any combination thereof.

Another aspect of the present invention provides a separator for use in a silver-zinc rechargeable battery comprising a polymer material comprising from about 1 wt% to less than about 50 wt% of ABS (e.g., from about 10 wt% to about 35 wt% or from about 15 wt% to about 30 wt%) by weight of the separator; and a zirconium oxide material as recited in claim 1 comprising a powder having a mean grain diameter of from about 40 nm to about 1000nm, wherein the separator has a resistance of no more than about 2000 Ohm•cm. In some embodiments, the separator further comprises a substrate. In some examples, the substrate comprises a polyolefin. For instance, the polyolefin comprises polyethylene, polypropylene, or any combination thereof. In other embodiments, the polymer material further comprises from about 1 wt% to about 30 wt% of a water soluble polymer (e.g., from about 2.5 wt% to about 10 wt%, from about 4 wt% to about 8 wt%, or from about 5 wt% to about 7 wt%) by weight of the separator. In some examples, the water soluble polymer comprises polyvinylpyrrolidone, polyvinyl alcohol, polyacrylic acid, carbopol, polyethylene glycol, polystyrene sulfonic acid, or any combination thereof. In some embodiments, the separator further comprises a dispersant For example, the separator comprises from about 0.1 wt% to about 9.99 wt% of dispersant (e.g., from about 1 wt% to about 20 wt% or from about 2 wt% to about 10 wt%) by weight of the separator. In some examples, the dispersant comprises dodecylbenzenefulfonic acid or any salt thereof.

Another aspect of the present invention provides a rechargeable battery comprising a cathode comprising a silver material; an anode comprising a zinc material; and a separator comprising a polymer material comprising ABS; and a zirconium oxide material, wherein the separator comprises greater than 10 wt% of zirconium oxide material wherein the zirconium oxide material comprises from 1 mol% to 10 mol% of yttrium oxide. In some embodiments, the polymer material further comprises a water soluble polymer. For example, the polymer material comprises from about 1 wt% to about 30 wt% of the water soluble polymer (e.g., from about 2.5 wt% to about 10 wt%, from about 4 wt% to about 8 wt%, or from about 5 wt% to about 7 wt%) by weight of the separator. In other examples, the water soluble polymer comprises polyvinylpyrrolidone, polyvinyl alcohol, polyacrylic acid, carbopol, polyethylene glycol, a polystyrene sulfonic acid, or any combination thereof. The separator further comprises greater than about 10 wt% of zirconium oxide material (e.g., from about 10.5 wt% to about 90 wt%, from about 40 wt% to about 90 wt%, or from about 50 wt% to about 85 wt%) by weight of the separator. In other embodiments, the zirconium oxide material comprises a powder having a mean grain diameter of greater than about 30 nm (e.g., from about 40 nm to about 500 nm or from about 45 nm to about 200 nm). The separator is substantially free of titanium. In other embodiments, the separator further comprises a dispersant. For example, the separator comprises from about 0.1 wt% to about 9.99 wt% of dispersant (e.g., from about 1 wt% to about 20 wt% or from about 2 wt% to about 10 wt%) by weight of the separator. In other examples, the dispersant comprises dodecylbenzenefulfonic acid or any salt thereof. In some embodiments, the zirconium oxide material comprises from about 1 mol% to about 10 mol% of yttrium oxide. In other embodiments, the separator further comprises a substrate, and the substrate comprises a woven or nonwoven film. In some examples, the substrate comprises a polyolefin. For instance, the polyolefin comprises polyethylene, polypropylene, or any combination thereof.

Another aspect of the present invention provides a method of manufacturing a separator for use in a silver-zinc

rechargeable battery comprising providing a first mixture comprising an ABS polymer, a dispersant, a solvent, and a zirconium oxide powder; and drying the mixture to generate a separator. In some implementations, the first mixture further comprises from about 0.5 wt% to about 15 wt% of ABS (e.g., from about 2 wt% to about 10 wt% or from about 3 wt% to about 7 wt%) by weight of the first mixture. In other implementations, the first mixture further comprises a water soluble polymer. In some examples, the first mixture comprises from about 0.1 wt% to about 1.5 wt% of the water soluble polymer (e.g., from about 0.5 wt% to about 1.3 wt%) by weight of the first mixture. In other examples, the water soluble polymer comprises polyvinylpyrrolidone, polyvinyl alcohol, polyacrylic acid, carbopol, polyethylene glycol, polystyrene sulfonic acid, or any combination thereof. In some implementations, the zirconium oxide powder has a mean grain diameter of greater than about 30 nm (e.g., from about 40 nm to about 1000nm). In some examples, the zirconium oxide powder is substantially free of titanium. In other implementations, the first mixture comprises from about 0.005 wt% to about 1 wt% of dispersant In some examples, the dispersant comprises dodecylbenzenefulfonic acid or any salt thereof. In some implementations, the zirconium oxide powder comprises from about 1 mol% to about 10 mol% of yttrium oxide. In other implementations, the first mixture comprises from about 50 wt% to about 90 wt% of solvent (e.g., from about 60 wt% to about 85 wt%) by weight of the first mixture. In some examples, the solvent comprises a polar aprotic solvent. For instance, the polar aprotic solvent comprises 2-butanone, acetone, or any combination thereof. In other instances, the solvent further comprises 1-methyl-2-pyrrolidinone. Some implementations further comprise casting the first mixture onto a surface. And, in some examples, the surface comprises a film (e.g., a woven or nonwoven film) comprising a polyolefin comprising polyethylene, polypropylene, or any combination thereof.

Also describe herein is a separator for use in a silver-zinc rechargeable battery comprising a polymer material comprising PVDF; and a filler comprising zirconium oxide, wherein the separator has a resistance of no more than about 20 Ohm•cm. In some instances, the polymer material comprises PVDF, and the PVDF comprises a homopolymer, a copolymer, or any combination thereof. For example, the PVDF comprises a copolymer selected from a block copolymer, an alternating copolymer, a statistical copolymer, a graft copolymer, or any combination thereof. In other examples, the PVDF comprises a copolymer, and the copolymer comprises a VDF monomer and monomer comprising a halogenated $C_{3-5}$ aliphatic. And, in some instances, the halogenated $C_{3-5}$ aliphatic monomer comprises hexafluoropropylene. In some instances, the PVDF comprises a homopolymer or copolymer either of which has a mean molecular weight of about 200,000 amu or greater (e.g., about 350,000 amu or greater or from about 400,000 to about 700,000 amu). In other instances, the separator further comprises greater than about 45 wt% of zirconium oxide (e.g., greater than about 49 wt% or from about 50 wt% to about 90 wt%) by weight of the separator. In some instances, the zirconium oxide comprises a powder comprising particles having a mean grain diameter of less than about 1 micron (e.g., less than about 0.75 microns or from about 500 nm to about 700 nm). And, in some instances, the zirconium oxide further comprises yttria. For example, the zirconium oxide further comprises from about 1 mol% to about 10 mol% of yttria.

Also described herein is a rechargeable battery comprising a cathode comprising a silver material; an anode comprising a zinc material; and a separator comprising a polymer material comprising PVDF and zirconium oxide powder. In some instances, the PVDF comprises a homopolymer, a copolymer, or any combination thereof. For example, the PVDF comprises a copolymer selected from a block copolymer, an alternating copolymer, a statistical copolymer, a graft copolymer, or any combination thereof. In some examples, the PVDF comprises a copolymer comprising a VDF monomer and a halogenated $C_{3-5}$ aliphatic monomer. For instance the halogenated $C_{3-5}$ aliphatic monomer comprises hexafluoropropylene. In some instances, the PVDF comprises a homopolymer or a copolymer either of which has a mean molecular weight of about 200,000 amu or greater (e.g., about 350,000 amu or greater or from about 400,000 to about 700,000 amu). In other instances, the separator further comprises greater than about 45 wt% of zirconium oxide powder (e.g., greater than about 49 wt% or from about 50 wt% to about 90 wt%) by weight of the separator. In some instances, the zirconium oxide powder comprises a mean grain diameter of less than about 1 micron (e.g., less than about 0.75 microns or from about 500 nm to about 700 nm). And, in some instances, the zirconium oxide powder further comprises yttria. For example, the zirconium oxide powder comprises from about 1 mol% to about 10 mol% of yttria.

Also described herein is a method of manufacturing a separator for use in a silver-zinc rechargeable battery comprising mixing a PVDF polymer material with an aprotic solvent to form a first mixture; mixing the first mixture with a filler comprising zirconium oxide powder to form a second mixture; and drying the mixture to generate a separator. In some implementations, the PVDF polymer material comprises a homopolymer, a copolymer, or any combination thereof. For example, the PVDF polymer material comprises a PVDF-copolymer, and the PVDF-copolymer is selected from a block copolymer, an alternating copolymer, a statistical copolymer, a graft copolymer, or any combination thereof. In some examples, the PVDF-copolymer comprises a VDF monomer and a halogenated $C_{3-5}$ aliphatic monomer. And, in some instances, the halogenated $C_{3-5}$ aliphatic monomer comprises hexafluoropropylene. In other implementations, the second mixture comprises greater than about 10 wt% zirconium oxide (e.g., from about 11 wt% to about 50 wt%, or from about 50 wt% to about 90 wt%) by weight of the second mixture. In some instances, the zirconium oxide further comprises a powder. For example, the zirconium oxide comprises a powder comprising a mean grain diameter of less than about 1 micron (e.g., less than about 0.75 microns or from about 500 nm to about 700 nm). In some implementations, the aprotic solvent comprises acetone, dimethyl sulfoxide, ethyl acetate, dichloromethane, tetrahydrofuran, dimethylformamide, acetonitrile, or any combination thereof. For instance, the aprotic solvent comprises acetone. Some implementations further comprising casting the second mixture to form a film. For example, the mixture is cast to give a film having a mean thickness of from about 0.01 inches to about 0.03 inches. Some implementations further comprise adding a phthalate to the second mixture. And, some implementations further comprise washing the second mixture with a washing solvent to remove the phthalate. In some examples, the phthalate is dibutyl phthalate. In other examples, the washing solvent comprises an alcohol (e.g., isopropyl alcohol, methanol, ethanol, butanol, or any combination thereof).

Also described herein is a separator for use in a silver-zinc rechargeable battery comprising a polyolefin polymer material having a mean molecular weight of at least about 500,000 amu; and a filler comprising zirconium oxide, wherein the zirconium oxide comprises from about 2 mol% to about 8 mol% of yttrium oxide, and the filler is substantially free of titanium. In some instances, the zirconium oxide comprises a powder having a surface area of at least about 5 $m^2$/g. For example, the zirconium oxide comprisesa powder having a surface area of from about 6 $m^2$/g to about 15 $m^2$/g. In other instances, the zirconium oxide comprises a powder having a mean grain diameter of less than about 1.5 microns. For example, the zirconium oxide comprises a powder having a mean grain diameter of from about 0.5 micron to about 1.2 microns. In some instances the zirconium oxide comprises from about 2.5 mol% to about 4 mol% of yttrium oxide. In other instances, the polyolefin polymer material has a mean molecular weight of at least about 1,000,000 amu. In some instances, the separator further comprises about 80 wt% or more of the filler and about 20 wt% or less of the polyolefin polymer material. In other instances, the polyolefin polymer material comprises polyethylene, polypropylene, or any combination thereof.

Also described herein is a rechargeable battery comprising cathode comprising a silver material, an anode comprising a zinc material, and a separator comprising a polyolefin polymer material having a mean molecular weight of at least about 500,000 amu, and a filler comprising zirconium oxide, wherein the zirconium oxide comprises from about 2 mol% to about 8 mol% of yttrium oxide, and the filler is substantially free of titanium. In some instances, the zirconium oxide comprises a powder having a surface area of at least about 5 $m^2$/g. For example, the zirconium oxide comprises a powder having a surface area of from about 6 $m^2$/g to about 15 $m^2$/g. In other instances, the zirconium oxide comprises a powder having a mean grain diameter of less than about 1.5 microns. For example, the zirconium oxide comprises a powder having a mean grain diameter of from about 0.5 micron to about 1.2 microns. In some instances, the zirconium oxide comprises from about 2.5 mol% to about 4 mol% of yttrium oxide. In other instances, the polyolefin polymer material has a mean molecular weight of at least about 1,000,000 amu. In some instances, the separator further comprises about 80 wt% or more of the filler and about 20 wt% or less of the polyolefin polymer material. In other instances, the polyolefin polymer material comprises polyethylene, polypropylene, or any combination thereof.

Also described herein is a method of manufacturing a separator for use in silver zinc rechargeable batteries comprising combining a polyolefin polymer material and a filler to generate a mixture; and processing the mixture to form a separator, wherein the polyolefin polymer material has a mean molecular weight of at least about 500,000 amu, the filler comprises zirconium oxide, wherein the zirconium oxide comprises from about 2 mol% to about 8 mol% of yttrium oxide, and the filler is substantially free of titanium. In some implementations, the zirconium oxide comprises a powder having a surface area of at least about 5 $m^2$/g. For example, the zirconium oxide comprises a powder having surface area of from about 6 $m^2$/g to about 15 $m^2$/g. In other implementations, the zirconium oxide comprises a powder having a mean grain diameter of less than about 1.5 microns. For example, the zirconium oxide comprises powder having a mean grain diameter of from about 0.5 micron to about 1.2 microns. In some implementations, the zirconium oxide comprises from about 2.5 mol% to about 4 mol% of yttrium oxide. In others, the polyolefin polymer material comprises a mean molecular weight of at least about 1,000,000 amu. And, in some implementations, the mixture is processed to form a separator that comprises 80 wt% or more of the filler and 20 wt% or less of the polyolefin polymer. In other implementations, the polyolefin polymer comprises polyethylene, polypropylene, or any combination thereof. Some implementations further comprise combining a plasticizer and the polyolefin polymer. For example, the plasticizer comprises a petroleum oil, a lubricating oil, a fuel oil, a tall oil, a linseed oil or any combination thereof. And, in some implementations, the mixture has a pH of less than 9.

## BRIEF DESCRIPTION OF THE FIGURES

FIGURE 1 is schematic diagram of an example embodiment of a rechargeable battery of the present invention illustrating charge and discharge current as well as the stacking order for battery components.

FIGURE 2A is an illustration of a synthetic scheme for generating an exemplary ABS polymer material comprising a zirconium oxide material.

FIGURE 2B is an illustration of a synthetic scheme for generating another exemplary ABS polymer material comprising a water soluble polymer (PVP) and zirconium oxide material.

FIGURE 3 is Scanning Electron Microscope images of an exemplary separator of the present invention comprising

ABS and zirconium oxide.

FIGURE 4A is a cross-sectional view of an exemplary separator of the present invention comprising ABS, zirconium oxide, and a substrate (Solupor).

FIGURE 4B is Scanning Electron Microscope images of an exemplary separator of the present invention comprising ABS, zirconium oxide, and a substrate (Solupor).

FIGURE 5 is a graphical plot of separator resistivity as a function of zirconium oxide content for exemplary ABS separators of the present invention.

FIGURE 6 is a graphical plot of separator resistivity as a function of zirconium oxide mean grain diameter for exemplary ABS separators of the present invention.

FIGURE 7 is a graphical plot of separator resistivity as a function of zirconium oxide mean grain diameter for exemplary ABS separators of the present invention comprising mixtures of two zirconium oxide powders having 40 nm and 1000 nm mean grain diameters.

FIGURE 8 is a graphical plot of separator resistivity as a function of zirconium oxide content for exemplary ABS separators of the present invention comprising substrates.

FIGURE 9 is a graphical plot of separator resistivity as a function of PVP content for exemplary ABS separators of the present invention.

FIGURE 10A is a photograph of a reference electrode on an apparatus that was used for characterizing the conductivity properties of separators of the present invention.

FIGURE 10B is a photograph of the reference electrodes on an apparatus that was used for characterizing the conductivity properties of separators of the present invention.

FIGURE 11 is schematic diagram of an example embodiment of a rechargeable battery of the present invention illustrating charge and discharge current as well as the stacking order for battery components.

FIGURE 12 is a graphical plot of voltage, current, and capacity as a function of time for an electrochemical cell comprising a PVDF separator displayed.

FIGURE 13 is a graphical plot of voltage and current as a function of time for an electrochemical cell comprising a PVDF separator.

FIGURE 14 is a graphical plot of capacity as a function of cycle number for an electrochemical cell comprising a PVDF separator.

FIGURE 15A is a photograph of an exemplary PVDF separator that was treated with an alkaline solution.

FIGURE 15B is a photograph of an exemplary PVDF separator that was treated with DBP and an alkaline solution.

FIGURE 16 is a graphical plot of voltage, current, and capacity as a function of time for an electrochemical cell comprising a PVDF separator treated with DBP that is continuously charged and discharged.

FIGURE 17 is a graphical plot of voltage and current as a function of time for an electrochemical cell comprising a PVDF separator treated with DBP that is continuously charged and discharged.

FIGURE 18 is a bar graph illustrating the gassing properties, measured as percent volume gain, of separator materials.

FIGURE 19 is a bar graph illustrating the gassing properties, measured as mean percent volume gain, of separator materials.

FIGURE 20 is a graphical plot of voltage and current as a function of time for the electrochemical cell comprising a PE separator that is continuously charged and discharged from hours 1900 to 2550 as well as graphical plots of cell capacity, EOC current, EOC voltage, average charge voltage, average discharge voltage, and charge time as a function of charge cycle number.

FIGURE 21 is a graphical plot of voltage and current as a function of time for an electrochemical cell comprising a PE separator that is continuously charged and discharged from hours 950 to 1550 as well as graphical plots of cell capacity, EOC current, EOC voltage, average charge voltage, average discharge voltage, and charge time as a function of charge cycle number.

These figures may not be to scale and some features may have been enlarged for better depiction of the features and operation of the invention. Furthermore, these figures are by way of example and are not intended to limit the scope of the present invention.

## DETAILED DESCRIPTION

The present invention provides a separator for use in a silver-zinc rechargeable battery, according to claim 1 and a rechargable battery according to claim 10.

I. DEFINITIONS

As used herein, the term "battery" encompasses electrical storage devices comprising one electrochemical cell or a plurality of electrochemical cells. A "secondary battery" is rechargeable, whereas a "primary battery" is not rechargeable. For secondary batteries of the present invention, a battery anode is designated as the positive electrode during discharge, and as the negative electrode during charge.

As used herein, "about" unless otherwise described means plus or minus 10 percent.

As used herein, "substantially resistant to oxidation by silver oxide" refers to a chemical property of a separator (e.g., a single layered separator or a multilayered separator) or an active layer thereof, wherein the separator or active layer is substantially inert to chemical oxidation by silver oxide. For example, the separator or active layer may be inert to chemical oxidation by silver oxide for a period of at least 1 day and a temperature of at least 40 °C (e.g., at least 45 °C, at least 50 °C, or at least 60 °C).

As used herein, "cross-link" or "cross-linked" refers to a covalent bond between two or more polymer chains, or a structural property wherein two or more polymer chains are covalently bonded together. Cross-links can be formed by chemical reactions that are initiated by heat, pressure, or radiation. Cross-links typically bond one or more chemical moieties attached to a polymer backbone with one or more chemical moieties attached to the backbone of another polymer backbone of the same or different composition.

As used herein, "independently cross-linked" and "internally cross-linked" are used interchangeably and refer to a structural property of an active layer comprising a polymer material (e.g., an ABS polymer material, an ABS-PVP polymer material, a PVDF polymer material, a PVDF-co-HFP copolymer material, PE polymer material, or other polymer material), wherein at least one polymer chain (e.g., an ABS polymer material, an ABS-PVP polymer material, a PVDF polymer material, a PVDF-co-HFP copolymer material, PE polymer material, or other polymer material) in the active layer is cross-linked with another polymer chain within the same active layer. For example, an independently cross-linked first active layer, which comprises a PVDF polymer material is one in which a PVDF polymer chain in the first active layer is cross-linked with another polymer chain in the first active layer. Or, an independently cross-linked second active layer, which comprises, for example, a PSA polymer material is one in which a PSA polymer chain in the second active layer is cross-linked with another polymer chain in the second active layer. It is noted that the cross-links present in an independently cross-linked active layer include intra-layer bonds that join two polymer chains of approximately the same chemical composition and intra-layer bonds that join two polymer chains of different chemical composition. It is also noted that "independently cross-linked" active layers can undergo further cross-linking that cross-links polymer chains in one active layer with polymer chains in one or more adjacent active layers.

As used herein, "ABS" or "acrylonitrile butadiene styrene" refers to a copolymer having a chemical formula of $(C_8H_8)_x$•$(C_4H_6)_y$•$(C_3H_3N)_z$, wherein x, y, and z are the numbers of each of the different types of monomers present in the ABS polymer. ABS may be formed by copolymerizing styrene and acrylonitrile in the presence of polybutadiene.

As used herein, "polyolefin" refers to a polymer produced from a simple olefin (also called an alkene with the general formula $C_nH_{2n}$) as a monomer. For example, polyethylene is the polyolefin produced by polymerizing the olefin ethylene. Polyolefins also include copolymers of different olefins such as copolymers of polyethylene and polyporpylene.

As used herein, "PVP" or "polyvinylpyrrolidone" refers to a water soluble polymer typically generated from the monomer N-vinylpyrrolidone. PVP has the chemical formula

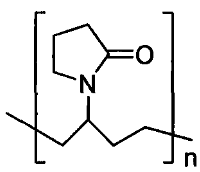

wherein n is the number of monomer units in the PVP chain.

As used herein, "polyvinyl alcohol" and "PVA" are used interchangeably to refer to polymers, solutions for preparing polymers, and polymer coatings. Use of these terms in no way implies the absence of other constituents. These terms also encompass substituted and co-polymerized polymers. A substituted polymer denotes one for which a substituent group, a methyl group, for example, replaces a hydrogen on the polymer backbone.

As used herein the term "aliphatic" encompasses the terms alkyl, alkenyl, alkynyl, each of which being optionally substituted as set forth below.

As used herein, an "alkyl" group refers to a saturated aliphatic hydrocarbon group containing 1-12 (e.g., 1-10, 1-8, 1-6, or 1-4) carbon atoms. An alkyl group can be straight or branched. Examples of alkyl groups include, but are not limited to, methyl, ethyl, propyl, isopropyl, butyl, isobutyl, *sec*-butyl, *tert*-butyl, *n*-pentyl, *n*-heptyl, or 2-ethylhexyl. An alkyl group can be substituted (i.e., optionally substituted) with one or more substituents such as halo, cycloaliphatic

[e.g., cycloalkyl or cycloalkenyl], heterocycloaliphatic [e.g., heterocycloalkyl or heterocycloalkenyl], aryl, heteroaryl, or alkoxy, without limitation.

As used herein, an "alkenyl" group refers to an aliphatic carbon group that contains 2-8 (e.g., 2-12, 2-10, 2-6, or 2-4) carbon atoms and at least one double bond. Like an alkyl group, an alkenyl group can be straight or branched. Examples of an alkenyl group include, but are not limited to, allyl, isoprenyl, 2-butenyl, and 2-hexenyl. An alkenyl group can be optionally substituted with one or more substituents such as halo, cycloaliphatic [e.g., cycloalkyl or cycloalkenyl], heterocycloaliphatic [e.g., heterocycloalkyl or heterocycloalkenyl], aryl, heteroaryl, or alkoxy, without limitation.

As used herein, an "alkynyl" group refers to an aliphatic carbon group that contains 2-8 (e.g., 2-12, 2-6, or 2-4) carbon atoms and has at least one triple bond. An alkynyl group can be straight or branched. Examples of an alkynyl group include, but are not limited to, propargyl and butynyl. An alkynyl group can be optionally substituted with one or more substituents such as those described above in the definitions of alkyl and/or alkenyl.

As used herein, "halogenated polyethylene" refers to polymers, solutions for preparing polymers, and polymer coatings having the following monomer unit given as Formula (A):

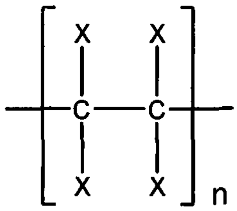

(A)

wherein X is a halogen (e.g., F, Br, Cl, I) or H, wherein at least one X is halogen; and n is an integer from 1 to greater than 2000 (e.g., n is sufficient to impart the polymer material with a mean molecular weight of greater than about 300,000 amu). 'Halogenated polyethylene' is used to refer to polymers, solutions for preparing polymers, and polymer coatings. Use of these terms in no way implies the absence of other constituents, such as co-polymers. The definition of halogenated polyethylenes includes halogenated polyvinylidenes. Examples of halogenated polyethylenes include polytetrafluoroethylene (PFTE), polychlorotrifluoroethylene (PCFTE), and polyvinylidine chloride (PVDC). Another example of halogenated polyethylene is polyvinylidene fluoride (PVDF), which has the repeating VDF monomer structure of Formula (B), shown below.

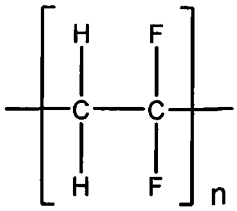

(B)

These terms also encompass polyethylene copolymers.

As used herein, "polytetrafluoroethylene" and "PTFE" are used interchangeably to refer to polymers, solutions for preparing polymers, and polymer coatings. Use of these terms in no way implies the absence of other constituents. These terms also encompass PTFE copolymers.

As used herein, "VDF" and "vinyl difluoride" are used interchangeably to refer to a PVDF monomer unit or a monomer unit in a PDVF copolymer (e.g., PVDF-co-HFP).

As used herein, "HFP" and "hexafluoropropylene" are used interchangeably to refer to a monomer unit having the structure

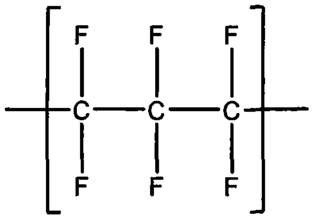

The term "battery" encompasses electrical storage devices comprising one electrochemical cell or a plurality of electrochemical cells. A "secondary battery" is rechargeable, whereas a "primary battery" is not rechargeable. For secondary batteries of the present invention, a battery anode is designated as the positive electrode during discharge, and as the negative electrode during charge.

The term "alkaline battery" refers to a primary battery or a secondary battery, wherein the primary or secondary battery comprises an alkaline electrolyte.

As used herein, an "electrolyte" refers to a substance that behaves as an electrically conductive medium. For example, the electrolyte facilitates the mobilization of electrons, anions and/or cations in the cell. Electrolytes include mixtures of materials such as aqueous solutions of alkaline agents. Such alkaline electrolytes can also comprise additives such as buffers. For example, an alkaline electrolyte may comprise a buffer comprising a borate or a phosphate. Example alkaline electrolytes may include, without limitation aqueous KOH, aqueous NaOH, or the liquid mixture of KOH in a polymer.

As used herein, "alkaline agent" refers to a base or ionic salt of an alkali metal (e.g., an aqueous hydroxide of an alkali metal). Furthermore, an alkaline agent forms hydroxide ions when dissolved in water or other polar solvents. Example alkaline electrolytes may include without limitation LiOH, NaOH, KOH, CsOH, RbOH, or combinations thereof.

A "cycle" or "charge cycle" refers to a consecutive charge and discharge of a cell or a consecutive discharge and charge of a cell, either of which includes the duration between the consecutive charge and discharge or the duration between the consecutive discharge and charge. For example, a cell undergoes one cycle when, freshly prepared, it is discharged to about 100% of its DOD and re-charged to about 100% of its state of charge (SOC). In another example, a freshly prepared cell undergoes 2 cycles when the cell is:

1.) Cycle 1: discharged to about 100% of its DOD and re-charged to about 100% SOC; immediately followed by
2.) Cycle 2: a second discharge to about 100% of its DOD and re-charged to about 100% SOC.

It is noted that this process may be repeated to subject a cell to as many cycles as is desired or practical.

As used herein, the terms "silver material" or "silver powder" refer to any silver compound such as Ag, AgO, $Ag_2O$, $Ag_2O_3$, AgOH, AgOOH, AgONa, $AgCuO_2$, $AgFeO_2$, $AgMnO_2$, $Ag(OH)_2$, hydrates thereof, or any combination thereof. Note that 'hydrates' of silver include hydroxides of silver. Because it is believed that the coordination sphere surrounding a silver atom is dynamic during charging and discharging of the cell wherein the silver serves as a cathode, or when the oxidation state of the silver atom is in a state of flux, it is intended that the term 'silver' or 'silver material' encompass any of these silver oxides and hydrates (e.g., hydroxides). Terms 'silver' or 'silver material' also includes any of the abovementioned species that are doped and/or coated with dopants and/or coatings that enhance one or more properties of the silver. Exemplary dopants and coatings are provided below. In some examples, silver or silver material includes a silver oxide further comprising an indium or aluminum dopant or coating. In some examples, silver or silver material includes a silver oxide further comprising Group 13 elements. In some examples, silver or silver material includes a silver oxide further comprising a trivalent dopant. Note that the term "oxide" used herein does not, in each instance, describe the number of oxygen atoms present in the silver or silver material. For example, a silver oxide may have a chemical formula of AgO, $Ag_2O_3$, or a combination thereof. Furthermore, silver can comprise a bulk material or silver can comprise a powder having any suitable mean particle diameter.

As used herein, a "dopant" or "doping agent" refers to a chemical compound that is added to a substance in low concentrations in order to alter the optical/electrical properties of the semiconductor. For example, a dopant may be added to the powder active material of a cathode to improve its electronic properties (e.g., reduce its impedance and/or resistivity or improve a cell's cycle life where the cathode is employed in said cell). In other examples, doping occurs when one or more atoms of a crystal lattice of a bulk material is substituted with one or more atoms of a dopant.

As used herein, the term "nanometer" and "nm" are used interchangeably and refer to a unit of measure equaling $1\times10^{-9}$ meters.

As used herein, "Ah" refers to Ampere (Amp) Hour and is a scientific unit for the capacity of a battery or electrochemical cell. A derivative unit, "mAh" represents a milliamp hour and is 1/1000 of an Ah.

As used herein, "S" refers to Siemens, and is the scientific unit of conductivity, the ability of a material to carry

a current. Conductivity may be expressed in specific conductivity units, S/cm.

As used herein, "maximum voltage" or "rated voltage" refers to the maximum voltage an electrochemical cell can be charged without interfering with the cell's intended utility. For example, in several zinc-silver oxide electrochemical cells that are useful in portable electronic devices, the maximum voltage is less than about 3.0 V (e.g., less than about 2.8 V, less than about 2.5 V, about 2.3 V or less, or about 2.0 V). In other batteries, such as lithium ion batteries that are useful in portable electronic devices, the maximum voltage is less than about 15.0 V (e.g., less than about 13.0 V, or about 12.6 V or less). The maximum voltage for a battery can vary depending on the number of charge cycles constituting the battery's useful life, the shelf-life of the battery, the power demands of the battery, the configuration of the electrodes in the battery, and the amount of active materials used in the battery.

As used herein, an "anode" is an electrode through which (positive) electric current flows into a polarized electrical device. In a battery or galvanic cell, the anode is the negative electrode from which electrons flow during the discharging phase in the battery. The anode is also the electrode that undergoes chemical oxidation during the discharging phase. However, in secondary, or rechargeable, cells, the anode is the electrode that undergoes chemical reduction during the cell's charging phase. Anodes are formed from electrically conductive or semi-conductive materials, e.g., metals, metal oxides, metal alloys, metal composites, semiconductors, or the like. Anode materials may include Si, Sn, Al, Ti, Mg, Fe, Bi, Zn, Sb, Ni, Pb, Li, Zr, Hg, Cd, Cu, $LiC_6$, mischmetals, alloys thereof, oxides thereof, or composites thereof.

Anodes can have many configurations. For example, an anode can be configured from a conductive mesh or grid that is coated with one or more anode materials. In another example, an anode can be a solid sheet or bar of anode material.

As used herein, a "cathode" is an electrode from which (positive) electric current flows out of a polarized electrical device. In a battery or galvanic cell, the cathode is the positive electrode into which electrons flow during the discharging phase in the battery. The cathode is also the electrode that undergoes chemical reduction during the discharging phase. However, in secondary or rechargeable cells, the cathode is the electrode that undergoes chemical oxidation during the cell's charging phase. Cathodes are formed from electrically conductive or semi-conductive materials, e.g., metals, metal oxides, metal alloys, metal composites, semiconductors, or the like. Cathode materials may include AgO, $Ag_2O$, HgO, $Hg_2O$, CuO, CdO, NiOOH, $Pb_2O_4$, $PbO_2$, $LiFePO_4$, $Li_3V_2(PO_4)_3$, $V_6O_{13}$, $V_2O_5$, $Fe_3O_4$, $Fe_2O_3$, $MnO_2$, $LiCoO_2$, $LiNiO_2$, $LiMn_2O_4$, or composites thereof.

Cathodes can also have many configurations. For example, a cathode can be configured from a conductive mesh that is coated with one or more cathode materials. In another example, a cathode can be a solid sheet or bar of cathode material.

As used herein, an "electronic device" is any device that is powered by electricity. For example, an electronic device can include a portable computer, a portable music player, a cellular phone, a portable video player, or any device that combines the operational features thereof.

As used herein, "cycle life" is the maximum number of times a secondary battery can be charged and discharged while retaining a minimum charge capacity.

The symbol "$\underline{M}$" denotes molar concentration.

Batteries and battery electrodes are denoted with respect to the active materials in the fully charged state. For example, a zinc-silver oxide battery comprises an anode comprising zinc and a cathode comprising silver oxide. Nonetheless, more than one species is present at a battery electrode under most conditions. For example, a zinc electrode generally comprises zinc metal and zinc oxide (except when fully charged), and a silver oxide electrode usually comprises silver oxide (AgO and/or $Ag_2O$) and silver metal (except when fully discharged).

The term "oxide" applied to alkaline batteries and alkaline battery electrodes encompasses corresponding "hydroxide" species, which are typically present, at least under some conditions.

As used herein, "charge profile" refers to a graph of an electrochemical cell's voltage or capacity with time. A charge profile can be superimposed on other graphs such as those including data points such as charge cycles or the like.

As used herein, "resistivity" or "impedance" refers to the internal resistance of a cathode in an electrochemical cell. This property is typically expressed in units of Ohms•cm or micro-Ohms•cm.

As used herein, the terms "first" and/or "second" do not refer to order or denote relative positions in space or time, but these terms are used to distinguish between two different elements or components. For example, a first separator does not necessarily proceed a second separator in time or space; however, the first separator is not the second separator and vice versa. Although it is possible for a first separator to proceed a second separator in space or time, it is equally possible that a second separator proceeds a first separator in space or time.

As used herein, "polyether" and "PE" are used interchangeably to refer to polymers, solutions for preparing polymers, and polymer coatings. Use of these terms in no way implies the absence of other constituents. These terms also encompass substituted and co-polymerized polymers. A substituted polymer denotes one for which a substituent group, a methyl group, for example, replaces a hydrogen on the polymer backbone.

As used herein, "polyethylene oxide" and "PEO" are used interchangeably to refer to polymers, solutions for preparing polymers, and polymer coatings. Use of these terms in no way implies the absence of other constituents.

These terms also encompass substituted and co-polymerized polymers. A substituted polymer denotes one for which a substituent group, a methyl group, for example, replaces a hydrogen on the polymer backbone.

As used herein, "polypropylene oxide" and "PPO" are used interchangeably to refer to polymers, solutions for preparing polymers, and polymer coatings. Use of these terms in no way implies the absence of other constituents. These terms also encompass substituted and co-polymerized polymers. A substituted polymer denotes one for which a substituent group, a methyl group, for example, replaces a hydrogen on the polymer backbone.

As used herein "oxidation-resistant" refers to a separator that resists oxidation in an electrochemical cell of an alkaline battery and/or is substantially stable in the presence of an alkaline electrolyte and/or an oxidizing agent (e.g., silver ions).

As used herein, "adjacent" refers to the positions of at least two distinct physical elements of a device such as, for example, a battery (e.g., at least one separator and at least one electrode (e.g., an anode and/or a cathode)) or layers of multilayered separator membrane. When an element such as a separator is adjacent to another element such as an electrode or even a second separator, one element is positioned to contact or nearly contact another element. For example, when a separator is adjacent to an electrode, the separator electrically contacts the electrode when the separator and electrode are in an electrolyte environment such as the environment inside an electrochemical cell. The separator can be in physical contact or the separator can nearly contact the electrode such that any space between the separator and the electrode is void of any other separators or electrodes. It is noted that electrolyte can be present in any space between a separator that is adjacent to an electrode or another separator.

As used herein, "unitary structure" refers to a structure that includes one or more elements that are concurrently or almost concurrently processed to form the structure. For example, a multilayered separator for use in an alkaline electrochemical cell that is a unitary structure can include one in which all of the separator ingredients or starting materials concurrently undergo a process (other than mechanical combination) that combines them and forms a single separator. Such multilayered separators include, for example, those that comprise a plurality of layers, which are formed by co-extruding starting materials from a plurality of sources to generate a wet co-extrusion that is sufficiently dried or irradiated such that at least two of the layers of the co-extrusion are independently cross-linked and/or cross-linked together. This unitary structure is not equivalent to a separator that includes a plurality of layers that are each individually formed and mechanically stacked to form a multi-layered separator.

As used herein "dendrite-resistant" refers to a separator that reduces the formation of dendrites in an electrochemical cell of an alkaline battery under normal operating conditions (i.e., when the batteries are stored and used in temperatures from about -20 °C to about 70 °C, and are not overcharged or charged above their rated capacity) and/or is substantially stable in the presence of an alkaline electrolyte, and/or is substantially stable in the presence of a reducing agent (e.g., an anode comprising zinc). In some examples, a dendrite-resistant separator may inhibit transport and/or chemical reduction of metal ions.

## II. ABS SEPARATORS

The separator according to the claimed invention use in a silver-zinc rechargeable battery comprises a polymer material comprising ABS; and a filler comprising a zirconium oxide material, wherein the separator has a resistance of no more than about 2000 Ohm•cm and wherein it fulfills the further features specified in claim 1.

### A. ABS Polymer Material

The polymer material comprises ABS. Some ABS polymers useful in separators of the present invention have an average molecular weight of more than 10,000 amu. Other ABS polymers have a melt index of at least 5 g/10 min (e.g., 6/10 min).

In other embodiments, the polymer material comprises greater than about 5 wt% of ABS (e.g., from about 10 wt% to about 35 wt% or from about 15 wt% to about 30 wt%) by weight of the separator. For example, the polymer material comprises from about 1 wt% to less than about 50 wt% of ABS (e.g., from about 10 wt% to about 35 wt% or from about 15 wt% to about 30 wt%) by weight of the separator.

In other embodiments, the polymer material further comprises water soluble polymer. For example, some polymer materials comprise ABS and a water soluble polymer. For instance, the polymer material comprises from about 1 wt% to about 30 wt% of a water soluble polymer (e.g., from about 2.5 wt% to about 10 wt%, from about 4 wt% to about 8 wt%, or from about 5 wt% to about 7 wt%) by weight of the separator. In other examples, the water soluble polymer comprises polyvinylpyrrolidone (PVP), polyvinyl alcohol (PVA), polyacrylic acid (PAA), carbopol, polyethylene glycol (PEG), polystyrene sulfonic acid (PSA), or any combination thereof.

B. Separator Filler

In some embodiments, the separator further comprises greater than about 10 wt% of filler (e.g., from about 10.5 wt% to about 90 wt%, from about 12 wt% to about 85 wt%, from about 40 wt% to about 90 wt%, or from about 50 wt% to about 85 wt%) by weight of the separator.

The filler comprises a zirconium oxide material. In some embodiments, the zirconium oxide material comprises a powder. For example, the zirconium oxide material comprises a powder having a mean grain diameter of greater than about 30 nm (e.g., from about 40 nm to about 500 nm or from about 45 nm to about 200 nm). In other examples, the zirconium oxide material comprises a powder having a mean grain diameter of from about 40 nm to about 1000 nm. And, in some examples, the zirconium oxide material comprises a mean grain diameter of less than 1.5 microns. For instance, the zirconium oxide material comprises a mean grain diameter of from about 0.5 microns to about 1.2 microns.

In some embodiments, the zirconium oxide material comprises a surface area of at least about 5 $m^2/g$. For example, the zirconium oxide material comprises a surface area of from about 6 $m^2/g$ to about 15 $m^2/g$. In other instances, the zirconium oxide material comprises a surface area of from about 6.5 $m^2/g$ to about 12 $m^2/g$.

According to the present invention, the zirconium oxide material further comprises yttrium oxide ($Y_2O_3$) in an amount of from 1 ta 10 mol %. For example, the yttria comprises between about 5 wt% and about 17 wt% (e.g., between about 4 wt% and about 7 wt%) of the zirconium oxide powder. In other examples, the zirconium oxide material comprises less than 10 mol% (e.g., from about 1 mol% to about 10 mol%) of yttrium oxide. And, in some examples, the zirconium oxide material comprises from about 2.5 mol% to about 4 mol% of yttrium oxide. Suitable grades of zirconium oxide include the Y3 grade and the Y3Z grade, which contains yttria, both of which are available from HiCharms, Bolton, England.

Although the zirconium oxide material may optionally contain trace amounts of impurities, the zirconium oxide material is substantially free of titanium. Also the filler is substantially free of titanium (e.g., the filler comprises less than 200 ppm of titanium).

C. Optional Features

In some embodiments, the separator further comprises a dispersant. Examples of suitable dispersants include anionic dispersants, cationic dispersants, nonionic dispersants, ampholytic dispersants, amphoteric dispersants, zwitterionic dispersants, or any combination thereof. In some examples, the dispersant comprises dodecylbenzenefulfonic acid or any salt thereof.

In some embodiments, the separator comprises from about 0.1 wt% to about 9.99 wt% of dispersant (e.g., from about 1 wt% to about 20 wt% or from about 2 wt% to about 10 wt%) by weight of the separator.

In some embodiments, the separator further comprises a substrate. In some examples, the substrate comprises a woven or nonwoven film onto which the polymer material is cast. In other examples, the substrate comprises a polyolefin. For instance, the polyolefin comprises polyethylene, polypropylene, or any combination thereof. In another instance, the substrate comprises a Solupor film.

In several embodiments, the ABS polymer material further comprises a plasticizer. Example plasticizers include glycerin, low-molecular-weight polyethylene glycol, aminoalcohol, polypropylene glycols, 1,3 pentanediol branched analogs, 1,3 pentanediol, water, or any combination thereof. For example, the plasticizer comprises glycerin, a low-molecular-weight polyethylene glycol, an aminoalcohol, a polypropylene glycols, a 1,3 pentanediol branched analog, 1,3 pentanediol, or combinations thereof, and/or water. In some examples, the plasticizer comprises greater than about 1 wt % of glycerin, low-molecular-weight polyethylene glycols, aminoalcohols, polypropylene glycols, 1,3 pentanediol branched analogs, 1,3 pentanediol, or any combination thereof, and less than 99 wt % of water by weight of the plasticizer. In other examples, the plasticizer comprises from about 1 wt % to about 10 wt % of glycerin, low-molecular-weight polyethylene glycols, aminoalcohols, polypropylene glycols, 1,3 pentanediol branched analogs, 1,3 pentanediol, or any combination thereof, and from about 99 wt % to about 90 wt % of water by weight of the plasticizer.

The separators of the present invention can be used with any battery, comprising any electrolyte, any anode and/or any cathode. The invention is especially suitable for use in an alkaline storage battery comprising a zinc anode and a silver oxide cathode but can be used with other anodes and other cathodes. For instance, a separator of the present invention can be used with anodes comprising zinc, cadmium or mercury, or mixtures thereof, for example, and with cathodes comprising silver oxide (e.g., AgO, $Ag_2O$, $Ag_2O_3$, or any combination thereof), nickel oxide, cobalt oxide or manganese oxide, or mixtures thereof).

III. HALOGENATED POLYETHYLENE SEPARATORS

Also described herein is a separator for use in a silver-zinc rechargeable battery comprising a polymer material comprising a halogenated polyethylene (e.g., PVDF); and a filler comprising a zirconium oxide material, wherein the separator has a resistance of no more than about 20 Ohm•cm.

In some instances the polymer material comprises a halogenated polyethylene, wherein the separator may inhibit metal oxide ion transport across the membrane.

As noted above, a buildup of metal deposits within separator pores can increase the separator resistance in the short term and ultimately lead to shorting failure due to formation of a continuous metal path through the separator. Further, metal oxide ions may decompose the anode, or precipitate on the anode surface. Further, the separator may help to suppress dendritic growth on the anode and/or have a relatively higher mechanical strength over traditionally used separators to resist dendrite penetration to avoid failure due to formation of a dendritic short between the electrodes. Further, the separator mitigates zinc electrode shape change by exhibiting uniform and stable ionic conductivity and ionic transport properties. Further, the separator may be resistant to chemical decomposition in alkaline electrolytes, which may extend the useful life of the battery. In separators also described herein, a halogenated polyethylene, such as PVDF may be used to impart chemical resistance, ion selectivity, and/or chemical resistance properties to the separator. Halogenated polyethylenes such as PVDF are chemically resistant to many solvents, strong acids, bases, and heat.

A. Halogenated Polyethylene Polymer Material

In some instances, the polymer material comprises a halogenated polyethylene. For example, the polymer material comprises PVDF. In other examples, the PVDF comprises a homopolymer, a copolymer, or any combination thereof. For instance, the PVDF comprises a copolymer selected from a block copolymer, an alternating copolymer, a statistical copolymer, a graft copolymer, or any combination thereof. In other instances, the PVDF comprises a copolymer, and the copolymer comprises a VDF monomer and monomer comprising a halogenated $C_{3-5}$ aliphatic group (e.g., chlorotrifluoroethylene (CTFE), trifluoroethylene (TrFE), tetrofluoroethylene (TFE), and hexafluoropropylene (HFP). In some instances, the PVDF comprises a copolymer, and the copolymer comprises a VDF monomer and an HFP monomer (e.g., a PVDF-co-HFP copolymer). One example PVDF-co-HFP material that is useful for the instances described herein is commercially available under the trade name Solvay Solef® 21216/1001 manufactured by Solvay Solexis, Brussels, Belgium, and is available in a powdered resin form. This product is reported to contain about 8-15% HFP.

In some instances the PVDF comprises a homopolymer or copolymer either of which has a mean molecular weight of about 200,000 amu or greater (e.g., about 350,000 amu or greater, about 450,000 or greater, or from about 400,000 amu to about 700,000 amu).

B. Separator Filler

In some instances, the separator further comprises a filler comprising zirconium oxide. For example, the separator comprises greater than about 40 wt% of zirconium oxide (e.g., greater than about 45 wt%, greater than about 49 wt%, or from about 50 wt% to about 90 wt%) by weight of the separator.

In some instances, the zirconium oxide material comprises a powder. For example, the zirconium oxide material comprises a powder having a mean grain diameter of less than about 1 micron (e.g., less than 0.75 microns, or from about 500 nm to about 700 nm). In other examples, the zirconium oxide powder has a mean grain diameter of greater than about 30 nm (e.g., from about 40 nm to about 500 nm or from about 45 nm to about 200 nm). In other examples, the zirconium oxide material comprises a powder having a mean grain diameter of from about 40 nm to about 1000 nm. And, in some examples, the zirconium oxide material comprises a mean grain diameter of less than 1.5 microns. For instance, the zirconium oxide material comprises a mean grain diameter of from about 0.5 microns to about 1.2 microns.

In some instances, the zirconium oxide material comprises a surface area of at least about 5 $m^2/g$. For example, the zirconium oxide material comprises a surface area of from about 6 $m^2/g$ to about 15 $m^2/g$. In other instances, the zirconium oxide material comprises a surface area of from about 6.5 $m^2/g$ to about 12 $m^2/g$.

In some instances, the zirconium oxide material further comprises yttria or yttrium oxide ($Y_2O_3$). For example, the yttria comprises between about 5 wt% and about 17 wt% (e.g., between about 4 wt% and about 7 wt%) of the zirconium oxide powder. In other examples, the zirconium oxide material comprises less than 10 mol% (e.g., from about 1 mol% to about 10 mol%) of yttrium oxide. And, in some examples, the zirconium oxide material comprises from about 2.5 mol% to about 4 mol% of yttrium oxide. Suitable grades of zirconium oxide include the Y3 grade and the Y3Z grade, which contains yttria, both of which are available from HiCharms, Bolton, England.

Although the zirconium oxide material may optionally contain trace amounts of impurities, in one instance the zirconium oxide material is substantially free of titanium. For example, the zirconium oxide material comprises less than about 200 ppm (e.g., less than about 180 ppm or less than about 150 ppm) of titanium. In other instances, the filler is substantially free of titanium (e.g., the filler comprises less than 200 ppm of titanium).

C. Optional Features

PVDF polymers or PVDF co-polymers described herein can optionally include additives such as surfactants, fillers, colorants, or other additives that improve one or more properties of the PVDF polymer. Furthermore, PVDF polymers can optionally comprise method artifacts such as lubricants, surfactants, or the like that are added to the material during processing and later substantially removed.

In one instance, the PVDF polymer material further comprises a surfactant Suitable surfactants include anionic surfactants, cationic surfactants, nonionic surfactants, ampholytic surfactants, amphoteric surfactants, and zwitterionic surfactants. In several examples, the PVDF polymer material comprises from about 0.01 wt % to about 1 wt % of surfactant by weight of the PVDF polymer material.

In another instance, the PVDF polymer material further comprises a plasticizer. Examples of suitable plasticizers include glycerin, low-molecular-weight polyethylene glycol, aminoalcohol, polypropylene glycols, 1,3 pentanediol branched analogs, 1,3 pentanediol, water, or any combination thereof. For example, the plasticizer comprises glycerin, a low-molecular-weight polyethylene glycol, an aminoalcohol, a polypropylene glycols, a 1,3 pentanediol branched analog, 1,3 pentanediol, or combinations thereof, and/or water. In some examples, the plasticizer comprises greater than about 1 wt % of glycerin, low-molecular-weight polyethylene glycols, aminoalcohols, polypropylene glycols, 1,3 pentanediol branched analogs, 1,3 pentanediol, or any combination thereof, and less than 99 wt % of water by weight of the plasticizer. In other examples, the plasticizer comprises from about 1 wt % to about 10 wt % of glycerin, low-molecular-weight polyethylene glycols, aminoalcohols, polypropylene glycols, 1,3 pentanediol branched analogs, 1,3 pentanediol, or any combination thereof, and from about 99 wt % to about 90 wt % of water by weight of the plasticizer.

In some instances, the PVDF polymer material may comprise a method artifact comprising a removable or "washable" component (e.g., a phthalate), which may be mixed with other components of the polymer material during processing and subsequently removed (e.g., rinsed away) after the polymer material has been cast. Methods of polymer material processing, formation, casting, and casting/washing are described in more detail below.

The incorporation of phthalates into the separator film during film formation, and the subsequent removal of the incorporated phthalates may, in some embodiments, create enhanced porosity in the separator film and thus improved conductivity. Examples of phthalates include butyl benzyl phthalate (BBP); butylcyclohexyl phthalate (BCP); butyl decyl phthalate (BDP); di(2-ethylhexyl) phthalate (DEHP); di(2-Propyl Heptyl) phthalate (DPHP); di(n-octyl) phthalate (DNOP); diallyl phthalate (DAP); dicyclohexyl phthalate (DCP); diethyl phthalate (DEP); diisobutyl phthalate (DIBP); diisodecyl phthalate (DIDP); diisoheptyl phthalate (DIHpP); diisohexyl phthalate (DIHxP); diisononyl phthalate (DINP); diisooctyl phthalate (DIOP); diisotridecyl phthalate (DIUP); diisoundecyl phthalate (DIUP); dimethyl phthalate (DMP); Di-n-butyl phthalate (DBP); di-n-hexyl phthalate (DNHP); di-n-pentyl phthalate (DNPP); di-n-propyl phthalate (DPP); ditridecyl phthalate (DTDP); diundecyl phthalate (DUP); and n-Octyl n-decyl phthalate (ODP).

In some embodiments, the phthalate comprises dibutyl phthalate (DBP). In some embodiments, the phthalate may be washed out from the separator with a protic solvent that does not dissolve the separator film itself. In some embodiments, the washing solvent may be an alcohol. In some embodiments, the washing solvent may be isopropyl alcohol.

In some embodiments of the present invention, the average ionic conductivity of a separator membrane with removable components may be about 1 x $10^{-3}$ to 9 x $10^{-3}$ S/cm.

The separators of the present invention can be used with any battery, comprising any electrolyte, any anode and/or any cathode. The invention is especially suitable for use in an alkaline storage battery comprising a zinc anode and a silver oxide cathode but can be used with other anodes and other cathodes. For instance, a separator of the present invention can be used with anodes comprising zinc, cadmium or mercury, or mixtures thereof, for example, and with cathodes comprising silver oxide (e.g., AgO, $Ag_2O$, $Ag_2O_3$, or any combination thereof), nickel oxide, cobalt oxide or manganese oxide, or mixtures thereof, for example.

IV. POLYOLEFIN SEPARATORS

Also described herein is a separator for use in a silver-zinc rechargeable battery, which comprises a polymer. Also described herein is material comprising a polyolefin (e.g., PE) having a mean molecular weight of at least about 250,000 amu; and a filler comprising a zirconium oxide, wherein the separator has a reduced gassing properties in the presence of an alkaline electrolyte and silver cathode.

It is noted that polyolefin separators described herein demonstrate reduced gassing when exposed to the alkaline environment inside electrochemical cells without sacrificing cell cycle life. Polyolefins useful in separators described herein have sufficient mean molecular weights to impart the separator with a sufficiently high glass transition temperature such that the separator is substantially solid during battery charging, discharging, and periods in between. Furthermore, such polyolefins are substantially insoluble in solvents (e.g., aqueous solvents) when cured or partially cured.

A. Polyolefin Polymer Material

Polyolefins useful in separators described herein have sufficient mean molecular weights to impart the separator with a sufficiently high glass transition temperature such that the separator is substantially solid during battery charging, discharging, and periods in between. Furthermore, such polyolefins are substantially insoluble in solvents (e.g., aqueous solvents) when cured or partially cured.

In some instances the polymer material comprises a polyolefin having a mean molecular weight of at least about 250,000 amu (e.g., at least about 500,000 amu). For example, the polyolefin has a mean molecular weight of from about 250,000 amu to about 5,000,000 amu. And, in another example, the polyolefin polymer comprises a mean molecular weight of at least about 1,000,000 amu.

In other instances, the polyolefin comprises a homopolymer or a co-polymer. For example, the polyolefin comprises a homopolymer such as polyethylene (PE), polypropylene (PP), polymethylpentene (PMP), polybutene-1 (PB-1), polyisobutylene (PIB), ethylene propylene rubber (EPR), ethylene propylene diene monomer, or any combination thereof. In other instances, the polyolefin comprises a co-polymer comprising polyethylene (PE), polypropylene (PP), polymethylpentene (PMP), polybutene-1 (PB-1), polyisobutylene (PIB), ethylene propylene rubber (EPR), ethylene propylene diene monomer, or any combination thereof. And, in some examples, the polyolefin comprises a co-polymer comprising at least 80 wt% of a hydrocarbon olefinic monomer (e.g., ethylene, propylene, butylenes, or any combination thereof) and another olefinic monomer such as acrylic, acrylic acid, or esters thereof.

B. Separator Filler

In some instances, the separator further comprises greater than about 10 wt% of filler (e.g., from about 10.5 wt% to about 90 wt%, from about 12 wt% to about 85 wt%, from about 40 wt% to about 90 wt%, or from about 50 wt% to about 85 wt%) by weight of the separator. For example, the separator comprises from about 12% to about 85% of filler. And, in some examples, the separator comprises 80 wt% or more of the filler and 20 wt% or less of the polyolefin polymer.

The filler comprises a zirconium oxide material. In some instances, the zirconium oxide material comprises a powder. For example, the zirconium oxide material comprises a powder having a mean grain diameter of greater than about 30 nm (e.g., from about 40 nm to about 500 nm or from about 45 nm to about 200 nm). In other examples, the zirconium oxide material comprises a powder having a mean grain diameter of from about 40 nm to about 1000 nm. And, in some examples, the zirconium oxide material comprises a mean grain diameter of less than 1.5 microns. For instance, the zirconium oxide material comprises a mean grain diameter of from about 0.5 microns to about 1.2 microns.

In some instances, the zirconium oxide material comprises a surface area of at least about 5 $m^2/g$. For example, the zirconium oxide material comprises a surface area of from about 6 $m^2/g$ to about 15 $m^2/g$. In other instances, the zirconium oxide material comprises a surface area of from about 6.5 $m^2/g$ to about 12 $m^2/g$.

In some instances, the zirconium oxide material further comprises yttria or yttrium oxide ($Y_2O_3$). For example, the yttria comprises between about 5 wt% and about 17 wt% (e.g., between about 4 wt% and about 7 wt%) of the zirconium oxide powder. In other examples, the zirconium oxide material comprises less than 10 mol% (e.g., from about 1 mol% to about 10 mol%) of yttrium oxide. And, in some examples, the zirconium oxide material comprises from about 2.5 mol% to about 4 mol% of yttrium oxide. A suitable grade of zirconium oxide containing yttria includes the Y3Z grade available from HiCharms, Bolton, England.

Although the zirconium oxide material may optionally contain trace amounts of impurities, in one instance, the zirconium oxide material is substantially free of titanium. For example, the zirconium oxide material comprises less than about 200 ppm (e.g., less than about 180 ppm or less than about 150 ppm) of titanium. In other instances, the filler is substantially free of titanium (e.g., the filler comprises less than 200 ppm of titanium).

C. Optional Features

**In** some instances, the polyolefin optionally comprises a small amount (e.g., less than 10 wt %) of lubricants, plasticizers, dispersants, or other processing aids in any combination. For example, the polyolefin comprises a plasticizer comprising a hydrophobic oil (e.g., tall oil, linseed oil, petroleum oil, lubricating oil, fuel oil, or any combination thereof). In another example, the polyolefin comprises less than 8 wt % of plasticizer.

In some instances, the separator comprises from about 0.1 wt% to about 9.99 wt% of dispersant (e.g., from about 1 wt% to about 20 wt% or from about 2 wt% to about 10 wt%) by weight of the separator.

In some instances, the polyolefin material further comprises a dispersant. Some instances comprise anionic dispersants, cationic dispersants, nonionic dispersants, ampholytic dispersants, amphoteric dispersants, zwitterionic dispersants, or any combination thereof. For example, the separator comprises less than 5% of dispersant.

The separators of the present invention can be used with any battery, comprising any electrolyte, any anode

and/or any cathode. The invention is especially suitable for use in an alkaline storage battery comprising a zinc anode and a silver oxide cathode but can be used with other anodes and other cathodes. For instance, a separator of the present invention can be used with anodes comprising zinc, cadmium or mercury, or mixtures thereof, for example, and with cathodes comprising silver oxide (e.g., AgO, $Ag_2O$, $Ag_2O_3$, or any combination thereof), nickel oxide, cobalt oxide or manganese oxide, or mixtures thereof).

V. SILVER-ZINC BATTERIES

Another aspect of the present invention provides a rechargeable battery comprising a separator that comprises a polymer material and a filler that comprises a zirconium oxide material as defined in claim 10.

A. Rechargeable Battery with an ABS Separator

One embodiment provides a rechargeable battery comprising a cathode comprising a silver material; an anode comprising a zinc material; and a separator comprising a polymer material comprising ABS; and a zirconium oxide material, wherein the separator comprises greater than 10 wt% of zirconium oxide material and is as is further defined in claim 10.

In some embodiments, the polymer material further comprises a water soluble polymer. For example, the polymer material comprises from about 1 wt% to about 30 wt% of the water soluble polymer (e.g., from about 2.5 wt% to about 10 wt%, from about 4 wt% to about 8 wt%, or from about 5 wt% to about 7 wt%) by weight of the separator. In other examples, the water soluble polymer comprises polyvinylpyrrolidone, polyvinyl alcohol, polyacrylic acid, carbopol, polyethylene glycol, a polystyrene sulfonic acid, or any combination thereof.

In some embodiments, the separator further comprises greater than about 10 wt% of zirconium oxide material (e.g., from about 10.5 wt% to about 90 wt%, from about 40 wt% to about 90 wt%, or from about 50 wt% to about 85 wt%) by weight of the separator.

In other embodiments, the zirconium oxide material comprises a powder having a mean grain diameter of greater than about 30 nm (e.g., from about 40 nm to about 500 nm or from about 45 nm to about 200 nm). In some embodiments, the separator is substantially free of titanium.

In other embodiments, the separator further comprises a dispersant. For example, the separator comprises from about 0.1 wt% to about 9.99 wt% of dispersant (e.g., from about 1 wt% to about 20 wt% or from about 2 wt% to about 10 wt%) by weight of the separator. In other examples, the dispersant comprises dodecylbenzenefulfonic acid or any salt thereof.

According to the invention, the zirconium oxide material comprises from about 1 mol% to about 10 mol% of yttrium oxide.

In other embodiments, the separator further comprises a substrate, and the substrate comprises a woven or nonwoven film. In some examples, the substrate comprises a polyolefin. For instance, the polyolefin comprises polyethylene, polypropylene, or any combination thereof.

B. Rechargeable Battery with a Halogenated Polyethylene Separator

Also described herein is a rechargeable battery comprising a cathode comprising a silver material; an anode comprising a zinc material; and a separator comprising a polymer material comprising a halogenated polyethylene (e.g., PVDF); and a zirconium oxide material.

In some instances, the PVDF comprises a homopolymer, a copolymer, or any combination thereof. For example, the PVDF comprises a copolymer selected from a block copolymer, an alternating copolymer, a statistical copolymer, a graft copolymer, or any combination thereof. In some examples, the PVDF comprises a copolymer comprising a VDF monomer and a halogenated $C_{3-5}$ aliphatic monomer. For instance the halogenated $C_{3-5}$ aliphatic monomer comprises hexafluoropropylene.

In some instances, the PVDF comprises a homopolymer or a copolymer either of which has a mean molecular weight of about 200,000 amu or greater (e.g., about 350,000 amu or greater or from about 400,000 to about 700,000 amu).

In other instances, the separator further comprises greater than about 45 wt% of zirconium oxide powder (e.g., greater than about 49 wt% or from about 50 wt% to about 90 wt%) by weight of the separator.

In some instances, the zirconium oxide powder comprises a mean grain diameter of less than about 1 micron (e.g., less than about 0.75 microns or from about 500 nm to about 700 nm).

And, in some instances, the zirconium oxide powder further comprises yttria. For example, the zirconium oxide material comprises from about 1 mol% to about 10 mol% of yttria. Suitable grades of zirconium oxide include the Y3 grade and the Y3Z grade, which contains yttria, both of which are available from HiCharms, Bolton, England.

C. Rechargeable Battery with a Polyolefin Separator

Also described herein is a rechargeable battery comprising cathode comprising a silver material, an anode comprising a zinc material, and a separator comprising a polyolefin polymer material having a mean molecular weight of at least about 500,000 amu, and a filler comprising zirconium oxide, wherein the zirconium oxide comprises from about 2 mol% to about 8 mol% of yttrium oxide, and the filler is substantially free of titanium.

In some instances, the zirconium oxide comprises a powder having a surface area of at least about 5 $m^2/g$. For example, the zirconium oxide comprises a powder having a surface area of from about 6 $m^2/g$ to about 15 $m^2/g$. In other instances, the zirconium oxide comprises a powder having a mean grain diameter of less than about 1.5 microns. For example, the zirconium oxide comprises a powder having a mean grain diameter of from about 0.5 micron to about 1.2 microns.

In some instances, the zirconium oxide comprises from about 2.5 mol% to about 4 mol% of yttrium oxide.

In other instances, the polyolefin polymer material has a mean molecular weight of at least about 1,000,000 amu.

In some instances, the separator further comprises about 80 wt% or more of the filler and about 20 wt% or less of the polyolefin polymer material.

In other instances, the polyolefin polymer material comprises polyethylene, polypropylene, or any combination thereof.

D. Cathode Materials Useful in Rechargeable Batteries

Cathodes useful in batteries of the present invention include a silver material such as silver oxide that undergoes reduction when the battery discharged. In several embodiments cathodes comprise a cathode active material including the silver oxide or silver material and an optional binder material such as a polymer. Furthermore, cathodes may optionally be doped or mixed with additives to improve the electrochemical properties of the cathode.

One exemplary cathode active material is In-doped silver oxide. The cathode was generated as follows:

A 4000 ml Erlenmeyer flask was placed into a hot water bath and a Teflon-coated radial propeller was used for stirring. 301.5 g of $AgNO_3$ and 2500 g of DI water were added to the reaction flask and stirred at 300 rpm. 2.85 g Indium (III) Nitrate Pentahydrate was dissolved in 100 g DI water and added to the flask. The mixture in the flask was heated to 50 °C.

In a plastic container, 800 g of KOH solution (1.4g/ml) was mixed with 50 g DI water to give a diluted KOH solution. The diluted KOH solution was added to the reaction flask all at once. The mixture was heated to 65 °C, and 544.8 g of potassium persulfate was added. Then, the flask was heated to 75 °C for 15 min. When the solution cooled down and the particles settled, the water was decanted. The particles were rinsed with DI water, and once the particles settled, the water was decanted. The particles underwent this rinse and decant process until the ion conductivity of the mixture dropped below 25 micro-Ohm.

This process generated 219.6 g of 1.3 wt% In doped AgO (assuming 100% yield).

The following exemplary cathodes, described in Table A, were generated by adjusting the amount of Indium (III) Nitrate Pentahydrate used in the procedure described above.

Table A: Exemplary cathodes of the present invention comprising indium dopant.

| Cathode Formulation | Activity | Resistivity (Ohm•cm) | Particle Size (μm) | | | BET ($m^2/g$) |
|---|---|---|---|---|---|---|
| 1.3 wt% In doped AgO | 93.2 | 28.3 | D10 0.56 | D50 1.7 | D95 3.05 | |
| 2.0 wt% In doped AgO | 93.8 | 25.1 | D10 0.74 | D50 1.92 | D95 4.17 | |
| 3.1 wt% In doped AgO | 94.3 | 20.8 | D10 0.5 | D50 1.34 | D95 2.96 | 1.9415 |
| 5.0 wt% In doped AgO | 92.9 | 24.4 | D10 0.6 | D50 1.89 | D95 4.08 | 2.4259 |
| 8.0 wt% In doped AgO | 91.7 | 26 | D10 0.69 | D50 2.12 | D95 3.92 | |

Another exemplary cathode of the present invention was prepared as follows:

Under stirring, 2.6 wt% lead acetate trihydrate solution was slowly added to a 20 wt% suspension of AgO in

de-ionized water. The resulting suspension was allowed to settle, and the water was decanted. The residue was re resuspend with deionized water and decanted. This decanting process was repeated several times and then filtered. The filtrate was dried in a vacuum oven at 60 °C. This process was used to generate about 100 g of Pb-coated AgO.

Cathode active materials can be formulated with 3% or more (e.g., 3%) PTFE binder (DuPont TE3859) to give a final cathode material that is incorporated (e.g., pressed onto) with a cathode current collector (e.g., silver, commercial product of Dexmet) and wrapped with a cathode adsorber wrap (e.g., SL6-8 (commercially available from Shanghai Shilong Hi-Tech Co., LTD)).

Additional cathodes useful in the present invention can be manufactured using the following procedures:

A 2000 ml beaker was placed into a hot water bath and an overhead stirring propeller was installed. 116.7 g of $AgNO_3$ and 1000 g of DI water were added to the reaction container and stirred at a stir speed of 400 rpm. 12 mg $ZnO$-$Al_2O_3$ was dispersed in 100 g DI water then added. 0.11 g of gelatin was added, and the flask was heated to 55 °C.

In a plastic container, 260 g of KOH solution (1.4g/ml) was mixed with 260 g of DI water to produce a diluted KOH solution. The diluted KOH solution was added to the heated reaction container using a MasterFlex pump. 198 g of potassium persulfate was added at 65 °C. After the addition of the potassium persulfate, the reaction flask was maintained at 65 °C for 50 min.

The stirring was stopped and the AgO particles settled to the bottom of the flask. The water was decanted. The particles were rinsed with DI water, and when the particles settled the water was decanted again. The rinse and decant process was repeated until the ion conductivity of the mixture dropped below 20 micro-Ohms. The resulting material was filtered and dried at 60 °C in a vacuum oven.

This process generated -85 g of AgO (yield > 99%).

In a 2 L Erlenmeyer flask, 78 g of the dry AgO powder, produced above, was added to 780 g of DI water. The mixture was stirred with overhead stirrer using a stir speed of 400 rpm. 3.04 g of lead acetate trihydrate was dissolved in 50 g DI water and added dropwise to the AgO mixture with a MasterFlex pump. Once the addition was completed, the lead solution container was rinsed with 50 g DI water twice and the dropwise addition continued.

60 min after the lead acetate addition, stirring was stopped, the AgO particles settled, and the water was decanted. The rinse and decant procedure was repeated until the ion conductivity measured less than 20 micro-Ohms. The resulting material was filtered and dried at 60 °C using a vacuum oven.

Another exemplary cathode of the present invention was prepared as follows: A 2000 ml beaker was placed into a hot water bath and an overhead stirring propeller was installed. 116.7 g of $AgNO_3$ and 1000 g of DI water were added to the reaction container and stirred using a stir speed of 400 rpm. 9 mg of silica was dispersed in 20 g of DI water then added. 0.11g of gelatin was added. The flask was heated to 55 °C.

In a plastic container, 260 g of KOH solution (1.4g/ml) was mixed with 260 g of DI water to produce a diluted KOH solution. The diluted KOH solution was added to the heated reaction container per MasterFlex pump. 198 g of potassium persulfate was added at 65 °C. After the addition of the potassium persulfate, the reaction flask was maintained at 65 °C for 50 min.

The stirring was stopped and the AgO particles settled to the bottom of the flask. The water was decanted. The particles were rinsed with DI water, and when the particles settled the water was decanted again. The rinse and decant process was repeated until the ion conductivity of the mixture dropped below 20 micro-Ohms.

This process generated ~85 g of AgO (yield > 99%).

In a 2 L Erlenmeyer flask containing the above AgO slurry, DI water was added until the total weight of the mixture was 935 g. The mixture was stirred with overhead stirrer using a stir speed of 400 rpm. 3.32 g of lead acetate trihydrate was dissolved in 50 g of DI water and added dropwise to the AgO mixture with a MasterFlex pump. Once the addition was completed, the lead solution container was rinsed with 50 g DI water twice and the dropwise addition continued.

60 min after the lead acetate addition, stirring was stopped, the AgO particles settled, and the water was decanted. This rinse and decant procedure was repeated until the ion conductivity measured less than 20 micro-Ohms. The resulting material was filtered and dried the material at 60 °C using a vacuum oven.

Another exemplary cathode of the present invention was prepared as follows:

A 2000 ml beaker was placed into a hot water bath and an overhead stirring propeller was installed. 116.7 g of $AgNO_3$ and 1000 g of DI water were added to the reaction container and stirred using a stir speed of 400 rpm. 95mg zirconium (IV) oxide was dispersed in 100 g of DI water then added. 0.11g gelatin was added. The flask was heated to 55 °C.

In a plastic container, 260 g of KOH solution (1.4g/ml) was mixed with 260 g of DI water to produce a diluted KOH solution. The diluted KOH solution was added to the heated reaction container per MasterFlex pump. 198 g of potassium persulfate was added at 65 °C. After the addition of the potassium persulfate, the reaction flask was maintained at 65 °C for 50 min.

The stirring was stopped and the AgO particles settled to the bottom of the flask. The water was decanted. The particles were rinsed with DI water, and when the particles settled the water was decanted again. This rinse and decant

process was repeated until the ion conductivity of the mixture dropped below 20 micro-Ohms.

This process generated ~85 g of AgO (yield > 99%).

In a 2 L Erlenmeyer flask containing the above AgO slurry, DI water was added until the total weight of the mixture was 935 g. The mixture was stirred with an overhead stirrer using a stir speed of 400 rpm. 3.32 g of lead acetate trihydrate was dissolved in 50 g of DI water and added dropwise to the AgO mixture with a MasterFlex pump. Once the addition was completed, the lead solution container was rinsed with 50 g of DI water twice and the dropwise addition continued.

60 min after the lead acetate addition, stirring was stopped, the AgO particles settled, and the water was decanted. The rinse and decant procedure was repeated until the ion conductivity measured less than 20 micro-Ohms. The resulting material was filtered and dried at 60 °C using a vacuum oven.

Another exemplary cathode of the present invention was prepared as follows:

A 4 L beaker was placed into a hot water bath and an overhead stirring propeller was installed. 233.4 g of $AgNO_3$ and 1200 g of DI water were added to the reaction container and stirred using a stir speed of 450 rpm. 0.2 g of gelatin was added. 26 mg of silica was dispersed in 50 g of DI water, 48 mg ZnO-$Al_2O_3$, and 240 mg of zirconium (IV) oxide (50nm, Alfa- Aesar) were dispersed in 58 g of DI water then added to the beaker. The beaker was heated to 55 °C.

In a plastic container, 520 g of KOH solution (1.4g/ml) was mixed with 520 g of DI water to produce a diluted KOH solution. The diluted KOH solution was dropped into the heated reaction container per MasterFlex pump. 396 g of potassium persulfate was added at 65 °C. After the addition of the potassium persulfate, the reaction flask was maintained at 65 °C for 50 min.

The stirring was stopped and the AgO particles settled to the bottom of the flask. The water was decanted. The particles were rinsed with DI water, and when the particles settled the water was decanted again. This rinse and decant process was repeated until the ion conductivity of the mixture dropped below 20 micro-Ohms.

This process generated ~170g of AgO (yield > 99%).

In a 4 L beaker containing the above AgO slurry, DI water was added until the total weight of the mixture was 1870g. The mixture was stirred with overhead stirrer using a stir speed of 400 rpm. 6.63 g of lead acetate trihydrate was dissolved in 50 g of DI water and added dropwise to the AgO mixture with a MasterFlex pump. Once the addition was completed, the lead solution container was rinsed with 50 g of DI water twice and the dropwise addition continued.

60 min after the lead acetate addition, stirring was stopped, the AgO particles settled, and the water was decanted. The rinse and decant procedure was repeated until the ion conductivity measured less than 20 micro-Ohms. The resulting material was filtered and dried at 60 °C using a vacuum oven.

Another exemplary cathode of the present invention was prepared as follows:

A 4 L beaker was placed into a hot water bath and an overhead stirring propeller was installed. 233.4 g of $AgNO_3$ and 1200 g of DI water were added to the reaction container and stirred at 450 rpm. 0.15 g of gelatin and 1.53 g gallium hydroxide were added. 32 mg silica was dispersed in 58 g water, 48 mg ZnO-$Al_2O_3$ and 240 mg zirconium (IV) oxide (50nm, Alfa- Aesar) were dispersed in 61 g DI water then added. The beaker was heated to 55 °C.

In a plastic container, 520 g of KOH solution (1.4 g/ml) was mixed with 520 g of DI water to produce a diluted KOH solution. The diluted KOH solution was dropped into the heated reaction container per MasterFlex pump. 396 g of potassium persulfate was added at 65 °C. After the addition of the potassium persulfate, the reaction flask was maintained at 65 °C for about 50 min.

The stirring was stopped and the AgO particles settled to the bottom of the flask. The water was decanted. The particles were rinsed with DI water, and when the particles settled the water was decanted again. The rinse and decant process was repeated until the ion conductivity of the mixture dropped below about 20 micro-Ohms.

This process generated about 170 g of Ga doped AgO.

In a 4 L beaker containing the above doped AgO slurry, DI water was added until the total weight of the mixture was 1870 g. The mixture was stirred with overhead stirrer at 400 rpm. 6.63 g of lead acetate trihydrate was dissolved in 50 g DI water and added dropwise to the AgO mixture with a MasterFlex pump. Once the addition was completed, the lead solution container was rinsed with 50 g DI water twice and the dropwise addition continued.

60 min after the lead acetate addition, stirring was stopped, the AgO particles settled, and the water was decanted. The rinse and decant procedure was repeated until the ion conductivity measured less than 20 micro-Ohms. The resulting material was filtered and dried at 60 °C using a vacuum oven.

Another exemplary cathode of the present invention was prepared as follows:

In a plastic container, 34.45 g of $AgNO_3$, 48.50 g $Cu(NO_3)_2 \cdot 2.5H_2O$, and 400 g of DI water were added. 4 mg silica and 41 mg zirconium (IV) oxide (50nm, Alfa- Aesar) were dispersed in 100 g DI water then added to the container.

A 2 L beaker was placed into a hot water bath and an overhead stirring propeller was installed. 233 g of KOH solution (1.4g/ml) was mixed with 233 g of DI water to produce a diluted KOH solution, which was stirred at 400 rpm. The beaker was heated to 55 °C. The above $AgNO_3$ solution was added. 173.6 g of potassium persulfate was added at 65 °C. After the addition of the potassium persulfate, the reaction flask was maintained at 65 °C for 30 min.

The stirring was stopped and the particles settled to the bottom of the flask. The water was decanted. The

particles were rinsed with DI water, and when the particles settled the water was decanted again. The rinse and decant process was repeated until the ion conductivity of the mixture dropped below 20 micro-Ohms.

The material was filtered and then dried in a vacuum oven at 60 °C. This process generated about 40 g of $AgCuO_2$.

E. Anode Materials Useful in Rechargeable Batteries

Anodes useful in batteries of the present invention include zinc anodes. Like cathodes, anodes may include an anode active material and additional binders or additives. One exemplary anode was formulated from 81.9 % Zinc, 5 % PTFE binder [DuPont TE3859], 12.7 % zinc oxide (AZO66), 0.45% $Bi_2O_3$, to give a final mass of 3.6 g. Each of these ingredients was obtained from commercial sources. The anode material was incorporated with an anode current collector: In/brass 32 (80/20), 43 mm × 31 mm, pressed at 2T, a commercial product of Dexmet. And, the anode material with current collector may be optionally wrapped with an anode adsorber wrap: Solupor (commercially available from Lydall, Inc. of Manchester CN).

Note that the formulation of the anode above serves as an example, and that the amounts of the additives (e.g., PTFE and $Bi_2O_3$) and zinc and zinc oxide may be adjusted to balance the anode with the chemistry of the cathode.

F. Electrolytes Useful in Rechargeable Batteries

Electrolytes useful in batteries of the present invention include alkaline materials that provide a source of hydroxide ions in aqueous solutions. For example, NaOH, KOH, and other alkaline hydroxides are useful in electrolytes for batteries of the present invention.

One exemplary electrolyte includes 32% by weight aqueous KOH and NaOH mixture (e.g., 90/10 to 70/30 mol ratio).

VI. METHODS

Another aspect of the present invention provides a method of manufacturing a separator for use in a rechargeable battery wherein the separator comprises a polymer material and a zirconium oxide material and is as defined in claim 1.

A. Manufacturing an ABS Separator

One embodiment provides a method of manufacture of a separator for use in a silver-zinc rechargeable battery, which may comprise, in general, mixing a ABS polymer material with an aprotic solvent to form a first mixture; mixing the first mixture with a filler comprising zirconium oxide powder to form a second mixture; casting the mixture over a surface to form a thin layer; and drying the mixture to generate a separator membrane.

Referring to FIGURE 2A, one method of manufacturing a separator for use in a silver-zinc rechargeable battery comprises providing a first mixture comprising an ABS polymer, a dispersant, a solvent, and a zirconium oxide powder; and drying the mixture to generate a separator.

Referring to FIGURE 2B, in some methods, the first mixture further comprises a water soluble polymer, such as any of the water soluble polymers discussed above (e.g., PVP).

In other methods, the zirconium oxide powder has a mean grain diameter of greater than about 30 nm. For example, the zirconium oxide powder has a mean grain diameter of from about 40 nm to about 1000 nm. In other examples, the zirconium oxide powder is substantially free of titanium. In some methods, the zirconium oxide powder comprises less than 10 mol% of yttrium oxide. In other methods, the zirconium oxide powder comprises less than 5 mol% of yttria oxide.

Some methods include providing a dispersant such as any of those described above.

In some embodiments, the solvent comprises a polar aprotic solvent. For instance, the polar aprotic solvent comprises 2-butanone or acetone. In other methods, the solvent further comprises 1-methyl-2-pyrrolidinone.

Some methods comprise casting the first mixture onto a surface. And, in some instances, the surface comprises a membrane comprising a polyolefin, such as any of the polyolefins described above.

**B.** Manufacturing a Halogenated Polyethylene Separator

Also described herein is a method of manufacturing a separator for use in a silver-zinc rechargeable battery comprising mixing a halogenated polyethylene (e.g., PVDF) polymer material with an aprotic solvent to form a first mixture; mixing the first mixture with a filler comprising zirconium oxide powder to form a second mixture; and drying the mixture to generate a separator.

In some methods, the halogenated polyethylene polymer material comprises PVDF. In other methods, the PVDF polymer material may comprise a PVDF homopolymer, a PVDF copolymer, or any combination thereof. For example, the PVDF polymer material may comprise a PVDF-copolymer, wherein the PVDF-copolymer is selected from a block copolymer, an alternating copolymer, a statistical copolymer, a graft copolymer, or any combination thereof. In some implementations, the PVDF-copolymer may comprise PVDF and a second polymer comprising a halogenated $C_{3-5}$ aliphatic monomer. For example, the copolymer may comprise hexafluoropropylene.

In other methods, the second mixture may comprise greater than about 25 wt % zirconium oxide, greater than about 45 wt% zirconium oxide, greater than about 49 wt % zirconium oxide, or about 50 wt % to about 90 wt % of zirconium oxide, by weight of the second mixture.

In some methods, the zirconium oxide may comprise a powder. In some embodiments, the powder may comprise particles having an average particle size of less than about 1 micron, as described above.

In some methods, the aprotic solvent may comprise acetone, dimethyl sulfoxide, ethyl acetate, dichloromethane, tetrahydrofuran, dimethylformamide, acetonitrile, or any combination thereof. For example, the aprotic solvent comprises acetone.

Some methods may further comprise casting the second mixture to form a thin film. For example, the second mixture is cast to give a film having a mean thickness of from about 0.01 inches to about 0.03 inches, or a mean thickness of from about 0.015 inches to about 0.020 inches.

Some methods may further comprise applying the second mixture to a substrate. For example the second mixture is applied to the substrate by painting, drying, spraying, dipping, or co-extruding the second mixture onto the substrate. And, in some implementations, the substrate comprises a porous polyolefin material such as PE.

In some methods, the second mixture is cured by air drying, heating, exposing the mixture to electromagnetic radiation, or any combination thereof. However, any suitable means may be used to at least partially cure the mixture to form a separator.

Some methods may further comprise adding a phthalate to the second mixture. And, some methods may further comprise washing the mixture with a liquid to remove the phthalate. In some methods, the phthalate is dibutyl phthalate. The membrane may be washed after completely or partially drying the film to form a membrane. For example, the membrane is washed with a washing solvent comprising an alcohol (e.g., isopropyl alcohol).

Also described herein is a method of manufacturing a separator for use in a silver-zinc rechargeable battery comprising combining a polymer selected from PVDF homopolymer, a PVDF-copolymer, or a combination thereof, with an organic solvent to form a solution; mixing a powder comprising zirconium oxide and yttria into the solution to form a mixture; casting the mixture over a surface; and drying the mixture to form a membrane.

Some implementations further comprise mixing a phthalate into the second mixture; and washing the phthalate from the membrane with a washing solvent comprising an alcohol.

C. Manufacturing a Polyolefin Separator

Also described herein is a method of manufacturing a separator for use in silver zinc rechargeable batteries comprising combining a polyolefin polymer material and a filler to generate a mixture; and processing the mixture to form a separator, wherein the polyolefin polymer material has a mean molecular weight of at least about 500,000 amu, the filler comprises zirconium oxide, wherein the zirconium oxide comprises from about 2 mol% to about 8 mol% of yttrium oxide, and the filler is substantially free of titanium.

In some implementations, the zirconium oxide comprises a powder having a surface area of at least about 5 $m^2/g$. For example, the zirconium oxide comprises a powder having surface area of from about 6 $m^2/g$ to about 15 $m^2/g$. In other implementations, the zirconium oxide comprises a powder having a mean grain diameter of less than about 1.5 microns. For example, the zirconium oxide comprises powder having a mean grain diameter of from about 0.5 micron to about 1.2 microns.

In some implementations, the zirconium oxide comprises from about 2.5 mol% to about 4 mol% of yttrium oxide.

In others, the polyolefin polymer material comprises a mean molecular weight of at least about 1,000,000 amu.

And, in some implementations, the mixture is processed to form a separator that comprises 80 wt% or more of the filler and 20 wt% or less of the polyolefin polymer.

In other implementations, the polyolefin polymer comprises polyethylene, polypropylene, or any combination thereof. Some implementations further comprise combining a plasticizer and the polyolefin polymer. For example, the plasticizer comprises a petroleum oil, a lubricating oil, a fuel oil, a tall oil, a linseed oil or any combination thereof. And, in some implementations, the mixture has a pH of less than 9.

VII. EXAMPLES

The following examples are given to more precisely and particularly illustrate the specific details of the present

invention. Equivalent procedures and quantities will occur to those skilled in the art and therefore the following examples are not meant to define the limits of the present invention, only to illustrate the invention. The following examples are taught.

A. ABS Separators

The following raw materials and instruments were used in the examples provided below. These raw materials were used without further purification unless otherwise indicated.

1. Poly(acrylonitrile-co-butadiene-co-styrene) (ABS, melt index: 6.0/10 min, Aldrich);
2. Dodecylbenzenesulfonic acid sodium salt (DBS, Aldrich);
3. Polyvinylpyrrolidone (PVP, Mw = 1,300,000, Aldrich);
4. 2-butanone (99%, Aldrich);
5. 1-methyl-2-pyrrolidinone (MPD, 99%, Aldrich);
6. $ZrO_2$ (HiC-GM05S7, 600 nm, Hicharms Limited); and
7. Mixer (Speed-Mixer, DAC 150 EVZ, PlackTek Inc.).

**Example 1: Preparation of ABS Separator with 80% $ZrO_2$**

1 g of ABS was added to 10 g of 2-butanone with 0.15 g of DBS as surfactant. The materials were mixed at room temperature for 10 min at 3500 rpm to achieve substantially uniform mixture. 4 g of $ZrO_2$ was added to the mixture and mixed at room temperature for 5 min at 3500 rpm. The resulting mixture was cast on a clean glass plate (6"x9") and dried at room temperature overnight. The separator was peeled from the glass after wetting with DI water for a period of time. The membrane was dried at room temperature and stored in a plastic bag until use. SEM images of this ABS separator is provided at FIGURE 3 using two different magnifications.

**Example 2: Preparation of ABS Separator with 80% $ZrO_2$ and Substrate**

The final mixture generated in Example 1 was cast on a polyethylene substrate (Sulopor®, commercially available from Lydall, Inc., Manchester, CN) using a drawdown machine (commercially available from Paul N. Gardner Co., Pompano Beach, FL). The resulting film was dried at room temperature and stored in plastic bag for further testing. An illustration and SEM images of this ABS separator are provided at FIGURES 4A and 4B, wherein the SEM images are provided for two different magnifications.

**Example 3: Preparation of ABS Separator with PVP and $ZrO_2$**

10 g of 2-butanone was mixed with 3 g of MPD. To that solution, 0.8 g of ABS, 0.2 g of PVP, and 0.15 g of DBS were added before mixing at room temperature for 10 min at 3500 rpm. 2 g of $ZrO_2$ was added to the mixture, then mixed at room temperature for 5 min at 3500 rpm. The resulting mixture was cast on a clean glass plate (6'x9'), dried overnight and carefully peeled from the glass plate.

**Example 4: Ionic Conductivity Experiments**

The membranes prepared using the procedures described above were soaked in KOH (1.4 g/ml) for 3 hours before testing the voltage between the electrodes. The conductivity of membranes were calculated as described below.

Referring to FIGURES 10A and 10B, a test box containing two platinum foil electrodes between which separator samples are placed, as well as two reference electrodes was used. The electrolyte used for both electrode pairs was KOH with a specific gravity (s.g.) of 1.40. Platinum foil electrodes were placed in holders at either end of the electrolyte bath in the test box. The platinum foil electrodes were connected at both ends of the test box to a BK Precision 1735Ah 30V/3Ah power supply.

Reference electrodes were connected to a Fluke 45 dual display multimeter. Bubble blockers were inserted into the test box. The power supply was turned on and the current adjusted to 0.200 A. Voltage at the reference electrodes was monitored to 0.00001 V resolution. The system was run for about three hours until the voltage was stabilized.

Samples of dimension 1"×1" were cut from separator films at random locations on the oversized films and soaked in 1.40 s.g. KOH. Samples were removed from the KOH bath, and excess KOH was removed with a pipette. An individual 1" x 1" sample was placed in a sample holder and into the electrolyte in the test box. The voltage ($V_s$) was recorded after 30 seconds. The sample was removed from the electrolyte, excess KOH was removed from the sample holder, and the sample holder replaced back into the test box. After 30 seconds, a voltage reading ($V_o$) for the empty sample box was recorded. The test procedure was then repeated for the remaining samples, after waiting for the test

box to equilibrate for 80 seconds between samples.

The wet thickness of each sample was recorded after the procedure.

Separator resistivity was determined using the following equation:

$$R_s = \frac{(V_s - V_g)}{I} \times Area$$

where $R_s$ = separator resistance (Ohm•cm$^2$), $V_s$ = voltage with separator sample in holder, $V_o$ = voltage with no separator sample in holder, $I$ = constant current (0.2 Ah), and Area = 3.8 cm$^2$.

Resistivity data for several ABS separators are provided in FIGURES 5-9.

**Example 5: Test Cells**

Test cells were prepared according to the diagram of FIGURE 1. The electrolyte, KOH (1.4 g/ml) was used for the purpose of offering $OH^-$ during charge and discharge processes. All separators were soaked in KOH for 3 hours before being assembled into cells. Discharge current was kept at 154 mA and discharge density was about 19.25 mA/cm$^2$. A constant current charging was kept at 200 mA (25 mA/cm$^2$) until voltage reached 1.98 V, then a constant voltage is kept for charging until the cell reached to the capacity of 650 mAh. Test cell components are described in detail below.

1. Cathode

The following material and methods were used to generate undoped AgO cathode material that was used in cells for purposes of evaluating separator performance.

Materials:

Silver nitrate (A.C.S. grade, DFG);
Gelatin (from bovine skin, type B, ~225 bloom, Sigma);
Potassium hydroxide solution (1.4g/ml, LabChem., Inc.); and
Potassium persulfate (99+%, Sigma-Aldrich).

Procedures: Undoped AgO.

A 2L Aceglass reactor was placed into a hot water bath and a Teflon-coated radial propeller was used. 116.7 g of $AgNO_3$ and 1000 g of DI water were added to the reactor and stirred at 400 rpm. The mixture in the reactor was heated to 55 °C. 0.11 g gelatin was added. In a plastic container, 240 g of KOH solution (1.4g/ml) was mixed with 240 g DI water to give a diluted KOH solution. The diluted KOH solution was added to the reactor per pump at 55°C. At 65 °C, 198 g of potassium persulfate was added and the temperature was maintained for 50 min.

The water was decanted as the solution cooled down and the particles settled. The particles were rinsed with DI water, and once the particles settled, the water was decanted. The particles underwent this rinse and decant process until the ion conductivity of the mixture measured below 25 micro-Ohm. The product was filtered and dried in a 60 °C vacuum oven.

The resultant undoped AgO cathode material is characterized below in Table B.

Table B: Undoped AgO cathodes.

| Cathode Formulation | Activity | Resistivity (Ohm•cm) | Particle Size (μm) | | |
|---|---|---|---|---|---|
| Undoped AgO | >95 | 24 | D10 | D50 | D95 |
| | | | 0.41 | 1.44 | 3.4 |

The activity of cathode materials described in Table B was measured by titration:

A sample was crushed with a spatula. If sample was not completely dry, it was dried in a vacuum oven at 60 °C overnight. 0.100 g of sample was added to a clean 125 ml flask, wherein the weight was measured accurately to at

least the third decimal place. 10 ml of acetate buffer and 5 ml KI solution was added to the flask. The flask was swirled to disperse particles followed by covering the flask by putting an inverted plastic cup over top, and sonicating for 2 hours. 20 ml of DI was added to the flask. The solution was titrated with $Na_2S_2O_3$ until the solution achieved a pale yellow (record exact normality). Approximately 1 ml of starch indicator was added and titration continued until the solution achieved a milky whitish-yellow endpoint.

The following equation was used to calculate activity:

$$Activity = \frac{(vol.\ \ titrant\ \ (mls)) \times (normality\ \ titrant) \times 12.388}{(mass\ \ of\ \ silver\ \ material(g))}$$

Particle size analysis was performed using a Horiba LA-930. Diameters on 10%, 50%, and 95% (D10, D50, and D95) were measured for the samples provided above and below.

The resistivities of this cathode material was measured using the following procedure: 3 grams of sample material was loaded into a powder compression cell with a 3.88 $cm^2$ electrode surface area. Force was applied to the sample from 10 to 40 tons by using a laboratory hydraulic press. The resistance was recorded every 5 tons and the thickness of the sample at 40 tons is also recorded. The resistivity of the sample is the resistance value extrapolated to infinite force divided by final material thickness and multiplied by the area of the powder cell electrodes.

Cathode Active material was formulated from 3% PTFE binder (DuPont TE3859) and the cathode material generated as described above, to give a final mass of 5.85 g.

Cathode Current Collector: silver, commercial product of Dexmet. Cathode was pressed at 5.5T.

Cathode Adsorber Wrap: SL6-8 (commercially available from Shanghai Shilong Hi-Tech Co., LTD.)

2. Anode

Anode Active Material was formulated from 81.9 % Zinc, 5 % PTFE binder [DuPont TE3859], 12.7 % zinc oxide (AZO66), 0.45% $Bi_2O_3$, to give a final mass of 3.6 g. Each of these ingredients was obtained from commercial sources.

Anode Current Collector: In/brass 32 (80/20), 43 mm × 31 mm, pressed at 2T, a commercial product of Dexmet.

Anode Adsorber Wrap: Solupor (commercially available from Lydall, Inc. of Rochester N.H.).

3. Electrolyte

The electrolyte was formulated from 32% by weight aqueous KOH and NaOH mixture (80/20 mol ratio).

4. Cell Housing

Aluminum laminated film (D-EL40H(II)) from Pred Material International was used as cell housing.

B. Halogenated Polyethylene Separators (Comparative Examples)

The following raw materials and instruments were used in the examples provided below. These raw materials were used without further purification unless otherwise indicated.

1. PVDF-co-HFP powder (Mn=271,000, Mw=596,000) Supplier: Solvay Solef 21216/1001, Belgium);
2. Acetone (99.9+% HPLC grade) Supplier: Sigma-Aldrich, USA;
3. Zirconium oxide powder (Zr19, average particle size 600 nm) Supplier: HiCharms, Ltd., GMO5S7, China).

**Example 6: PVDF Separator (25 wt% PVDF + 75 wt% Zirconium Oxide)** (Comparative Example)

***Fabrication of a PVDF membrane without DBP.***

A PVDF-co-HFP/acetone solution was prepared by dissolving 3.75 g PVDF-co-HFP powder into 85 g of acetone overnight by ball milling process. 4.5 g of Zr19 was added into 35.5g of the PVDF-co-HFP/acetone solution and mixed in a Flacktek mixer at 1000 rpm for 4 minutes. This leads to a PVDF-co-HFP: Zr19 ratio of 1:3 and a total solid loading of 15%.

The mixture was then cast on a clean and leveled glass plate by using a doctor blade apparatus with a gap of 0.015 inches to produce a film. The film was allowed to dry at room temperature for about 2 hours. The dried, whitish

film was then carefully removed from the glass plate and cut into the desired size for separator applications. (Comparative Example)

**Example 7: PVDF Separator (55 wt% PVDF + 45 wt% Zirconium Oxide)** (Comparative Example)

***Fabrication of the PVDF separator membrane with DBP.***

1. Materials Used

Dibutyl phthalate (DBP, 99%, Sigma-Aldrich, USA), and isopropyl alcohol (IPA, 99%, Medical Chemical Corp., USA) was used, in addition to the materials listed above for Example 6.

2. Example Method

As in Example 6, a PVDF-co-HFP/acetone solution was prepared by dissolving 3.75 g PVDF-co-HFP powder into 85 g of acetone overnight by ball milling process. 3.12 g of Zr19 and 0.47 DBP (i.e., 10 wt% of the PVDF plus Zr19) was added into 35.5g of the PVDF-co-HFP/acetone solution and mixed in a Flacktek mixer at 1000 rpm for 4 minutes.

The mixture was then cast on a clean and leveled glass plate by using a doctor blade apparatus with a gap of 0.020 inches to produce a film. The film was allowed to dry at room temperature for about 2 hours. The DBP was rinsed from the dried film with five washes of IPA in a plastic tank, 15-20 minutes per wash. The washed film was then allowed to dry at room temperature for 15-20 minutes. The dried, whitish film was then carefully removed from the glass plate and cut into the desired size for separator applications.

**Example 8: Characterization of Separators** (Comparative Example)

Testing ionic resistance of separator film

1. Production of the Testing film (25 wt% PVDF + 75 wt% Zirconium Oxide)

A polymeric separator film was prepared by casting a portion of the following coating composition onto Mylar using a Gardco blade applicator:

7.5 g of PVDF-co-HFP powder was dissolved in 170 g acetone, to which was added 22.5 g of zirconium oxide powder. The mixture was mixed using a Flacktec mixer at 1000 rpm for 2 min. The mixture was then cast onto Mylar using a Doctor blade at 0.015 inches followed by ambient air drying, to produce a white, 30 μm film.

2. Measuring Ionic Resistance

The resistivity of the film was measured to be 14.3 ± 3.1 Ohm•cm. The procedure for measuring the ionic resistance of the film is listed below.

Referring to FIGURES 10A and 10B, a test box containing two platinum foil electrodes between which separator samples may be placed, as well as two reference electrodes was used. The electrolyte used for both electrode pairs was KOH with a specific gravity (s.g.) of 1.40. Platinum foil electrodes were placed in holders at either end of the electrolyte bath in the test box. The platinum foil electrodes were connected at both ends of the test box to a BK Precision 1735Ah 30V/3Ah power supply.

Reference electrodes were connected to a Fluke 45 dual display multimeter. Bubble blockers were inserted into the test box. The power supply was turned on and the current adjusted to 0.200 A. Voltage at the reference electrodes was monitored to 0.00001 V resolution. The system was run for about three hours until the voltage was stabilized.

Four samples of 1" x 1" dimensions were cut from the separator film at random, and soaked in 1.40 s.g. KOH. Samples were removed from the KOH bath, and excess KOH was removed with a pipette. An individual 1" x 1" sample was placed in a sample holder and into the electrolyte in the test box. The voltage ($V_s$) was recorded after 30 seconds. The sample was removed from the electrolyte, excess KOH was removed from the sample holder, and the sample holder replaced back into the test box. After 30 seconds, a voltage reading ($V_o$) for the empty sample box was recorded. The test procedure was then repeated for the remaining three samples, after waiting for the test box to equilibrate for 80 seconds between samples.

The wet thickness of each sample was recorded after the procedure.

Separator resistivity was determined using the following equation:

$$R_s = \frac{(V_s - V_g)}{I} \times Area$$

where $R_s$ = separator resistance (Ohm•cm$^2$), $V_s$ = voltage with separator sample in holder, $V_o$ = voltage with no separator sample in holder, $I$ = constant current (0.2 Ah), and Area = 3.8 cm$^2$.

**Example 9: Solubility in KOH** (Comparative Example)

Solubility in KOH

Referring to FIGURES 15A and 15B, Separator films, produced in accordance with the procedures provided in Examples 6 and 7, were soaked in KOH (1.4 g/ml $H_2O$) overnight. No significant change in dimension or color was observed.

**Example 10: Test Cell using the Separator of Example 6** (Comparative Example)

***Test cell battery with PVDF-co-HFP separator membrane without DBP***

FIGURE 11 schematically illustrates the arrangement order of elements used in a silver-zinc rechargeable battery. The electrolyte, KOH (1.4 g/ml) is used for purpose of offering $OH^-$ during the charge and discharge process. All separators were soaked in KOH for 3 hours before being assembled into clam cells. Discharge current was kept at 171 mAh and discharge density was about 213 mAh. A constant current charging was kept at 200 mAh (25 mAh/cm) until voltage reached 2.03 V, then a constant voltage at 1.98 V was kept for charging the cell until the cell reached a capacity of 600 mAh.

The composition of the cathode active material used was standard 1.3% PbAc-coated AgO : 2% doped + 3% coated AgO in a 80: 20 ratio. The binder used was 5% PVDF-co-HFP(21216) with MEK (methyl ethyl ketone). The cathode was wrapped in SL fabric manufactured by SciMAT.

The composition of the anode material used was Zn-10 (87.77%), ZnO (6.76%), $Bi_2O_3$ (0.47%) with 5% PVDF-co-HFP (Solvay Solef 21216), dissolved by acetone. The anode was wrapped in a microporous polyethylene Solupor membrane.

A PVDF separator was used between the anode and cathode along with a PVA V6-2 membrane, with the PVDF membrane facing the anode, and the V6-2 facing the cathode. The PVDF membrane was manufactured according to Example 6.

The electrolyte was 40% KOH.

FIGURES 12-14 show the cycling behavior of AgO/Zn cell comprising a PVDF+$ZrO_2$ separator, as prepared in Example 6.

The data show that the cell demonstrate a low impedance and excellent cycle life. The conductivity of the composite membrane is around 16.5 S/cm, which is close to that of a PVA V6-2 standard membrane (15-19 S/cm).

**Example 11: Test Cell using the Separator of Example 7** (Comparative Example)

***Test cell battery with PVDF-co-HFP separator membrane with DBP***

The composition of the cathode active material used was standard 1.3%PbAc-coated AgO. The binder used was 5% PVDF-co-HFP(21216) dissolved by dimethyl carbonate (DMC). The cathode was wrapped in SL fabric manufactured by SciMAT.

The composition of the anode material used was Zn-10 (87.77%), ZnO (6.76%), $Bi_2O_3$ (0.47%) with 5% PVDF-co-HFP (Solvey Solef 21216) dissolved by acetone. The anode was wrapped in a microporous polyethylene Solupor membrane.

A PVDF separator with DBP was used between the anode and cathode along with a PVA V6-2 membrane, with the PVDF membrane facing the anode, and the V6-2 facing the cathode. The PVDF membrane was manufactured according to Example 7.

The electrolyte was 40% KOH.

FIGURES 16 and 17 show the cycling behavior of AgO/Zn cell comprising a PVDF+$ZrO_2$ separator, as prepared in Example 7.

The data show that the cell demonstrates a low impedance and excellent cycle life. The conductivity of the composite membrane is around 7 x $10^{-3}$ S/cm, reflecting the added porosity created by the addition of DBP.

**Example 12: Characterization of Exemplary Filler Materials**

Exemplary filler materials comprising zirconium oxide and yttrium oxide are characterized below. These materials were obtained from commercial sources.

| Property | $ZrO_2$ (Y3) | $ZrO_2$ (Y3Z) |
|---|---|---|
| Particle Size (d50) | 0.9 μm | 0.78 μm |
| Surface Area (m2/g) | 8 | 10 |
| Ca Water Impurity (ppm) | 50-100 | 20 |

It is noted that the Y3Z grade of zirconium oxide possesses yttria, whereas the Y3 grade does not.

**Example 13: Gassing of Individual Separator Constituents**

The following materials, in powder form, were tested for gassing by enclosing the separator in an inert bag along with alkaline electrolyte and cathode material, prepared as described in Example 5, and heated to 60 °C for a period of 2 weeks. The data from these experiments are presented in FIGURES 18 and 19, and in the table below.

| Material | Avg. Vol. per gram | Avg. Vol. gain (%) |
|---|---|---|
| Control-No powder | -0.32025 | 61% |
| 0.35 g Y3 $ZrO_2$ | -1.65604 | 322% |
| 0.35 g Y3Z $ZrO_2$ | -0.6865 | 132% |
| 0.35 g Zr-19 $ZrO_2$ | -0.63205 | 120% |
| 0.35 g $TiO_2$ (Fourpole) | -4.27427 | 788% |
| 0.35 g Titanium (IV) | -3.6523 | 656% |
| 0.35 g $TiO_2$ (Rutile) | -4.51496 | 837% |

**Example 14: Evaluation of Test Cell Performance with Cycle Life** (ComParative Example)

Referring to FIGURES 20 and 21, separators were placed in test cells and the test cells' performances were evaluated for cycle life. The test cells were constructed as follows:

The electrolyte, KOH (1.4 g/ml) is used for purpose of offering $OH^-$ during the charge and discharge process. All separators were soaked in KOH for 3 hours before being assembled into clam cells. Discharge current was kept at 171 mAh and discharge density was about 213 mAh. A constant current charging was kept at 200 mAh (25 mAh/cm) until voltage reached 2.03 V, then a constant voltage at 1.98 V was kept for charging the cell until the cell reached a capacity of 600 mAh.

The composition of the cathode active material used was standard 1.3% PbAc-coated AgO: 2% doped + 3% coated AgO in a 80: 20 ratio. The binder used was 5% PVDF-co-HFP(21216) with MEK (methyl ethyl ketone). The binder and silver material are combined to form a dough that is pressed onto a cathode current collector: silver, commercial product of Dexmet. Cathode was pressed at 5.5T. And, the cathode was wrapped in SL fabric manufactured by SciMAT.

The composition of the anode material used was Zn-10 (87.77%), ZnO (6.76%), $Bi_2O_3$ (0.47%) with 5% PVDF-co-HFP (Solvay Solef 21216), dissolved by acetone. The anode was wrapped in a microporous polyethylene Solupor membrane. The anode was pressed onto a cathode current collector: In/brass 32 (80/20), 43 mm × 31 mm, pressed at 2T, a commercial product of Dexmet.

On review of the gassing data and the test cell cycle life data, the best performing batteries included those constructed from PE separators comprising zirconium oxide that included yttrium oxide (Y3Z grade zirconium oxide). As such, zirconium oxides that provided separators with improved cycle life gassed more readily that the control and the pure zirconium oxide, but less readily that the titanium-containing materials. In terms of the gassing experiments, the best performing separators were prepared with zirconium oxide that underwent an average volume gain of from about 100% to about 400%.

## Claims

1. A separator for use in a silver-zinc rechargeable battery comprising:

   a polymer material comprising ABS; and
   a filler comprising a zirconium oxide material,

   wherein the separator is substantially free of titanium and has a resistivity of no more than 2000 Ohm·cm wherein the zirconium oxide material comprises from 1 mol% to 10 mol% of yttrium oxide.

2. The separator of claim 1, wherein the separator has a pore size of about 5 nm or greater.

3. The separator of either of claims 1 or 2, wherein the polymer material further comprises from about 1 wt% to about 30 wt% of a water soluble polymer comprising polyvinylpyrrolidone, polyvinyl alcohol, polyacrylic acid, carbopol, polyethylene glycol, polystyrene sulfonic acid, or any combination thereof.

4. The separator of any one of claims 1-3, further comprising greater than about 10 wt% of filler.

5. The separator of any one of claims 1-4, wherein the zirconium oxide material comprises a powder having a mean grain diameter of greater than 30 nm.

6. The separator of any one of claims 1-5, further comprising a dispersant.

7. The separator of claim 6, further comprising from about 0.1 wt% to about 9.99 wt% of dispersant.

8. The separator of either of claim 6 or 7, wherein the dispersant comprises dodecylbenzenefulfonic acid or any salt thereof.

9. The separator of any one of claims 1-8, further comprising a substrate.

10. A rechargeable battery comprising:

    a cathode comprising a silver material;
    an anode comprising a zinc material; and
    a separator comprising:

    a polymer material comprising ABS; and
    a zirconium oxide material,

    wherein the separator is substantially free of titanium and comprises greater than 10 wt% of zirconium oxide material wherein the zirconium oxide material comprises from 1 mol% to 10 mol% of yttrium oxide.

11. The battery of claim 10, wherein the polymer material further comprises from 1 wt% to 30 wt% of a water soluble polymer comprising polyvinylpyrrolidone, polyvinyl alcohol, polyacrylic acid, carbopol, polyethylene glycol, a polystyrene sulfonic acid, or any combination thereof.

12. The battery of any one of claims 10-11, wherein the zirconium oxide material comprises a powder having a mean grain diameter of greater than 30 nm.

13. The battery of any one of claims 10-12, wherein the separator further comprises a dispersant.

14. The battery of claim 13, wherein the separator comprises from 0.1 wt% to 9.99 wt% of dispersant.

15. The battery of claim 14, wherein the dispersant comprises dodecylbenzenefulfonic acid or any salt thereof.

16. The battery of any one of claims 10-15, wherein the separator further comprises a substrate, and the substrate comprises a woven or nonwoven film.

**Patentansprüche**

1. Ein Separator zur Verwendung in einer wiederaufladbaren Silber-Zink-Batterie, welcher:

   ein ABS umfassendes Polymermaterial und
   einen ein Zirconiumoxidmaterial umfassenden Füllstoff

   umfasst, wobei
   der Separator im Wesentlichen frei von Titan ist und einen spezifischen Widerstand von nicht höher als 2000 Ohm•cm besitzt, wobei
   das Zirconiumoxidmaterial 1 Mol-% bis 10 Mol-% Yttriumoxid enthält.

2. Der Separator nach Anspruch 1, wobei der Separator eine Porengröße von etwa 5 nm oder mehr besitzt.

3. Der Separator nach Anspruch 1 oder 2, wobei das Polymermaterial ferner etwa 1 Gew.-% bis etwa 30 Gew.-% eines wasserlöslichen Polymers umfasst, das Polyvinylpyrrolidon, Polyvinylalkohol, Polyacrylsäure, Carbopol, Polyethylenglykol, Polystyrolsulfonsäure oder irgendeine Kombination davon umfasst.

4. Der Separator nach einem der Ansprüche 1 bis 3, der ferner mehr als etwa 10 Gew.-% Füllstoff umfasst.

5. Der Separator nach einem der Ansprüche 1 bis 4, wobei das Zirconiumoxidmaterial ein Pulver mit einem mittleren Korndurchmesser von größer als 30 nm umfasst.

6. Der Separator nach einem der Ansprüche 1 bis 5, der ferner ein Dispergiermittel umfasst.

7. Der Separator nach Anspruch 6, der ferner etwa 0,1 Gew.-% bis etwa 9,99 Gew.-% Dispergiermittel umfasst.

8. Der Separator nach Anspruch 6 oder 7, wobei das Dispergiermittel Dodecylbenzolfulfonsäure oder ein Salz davon umfasst.

9. Der Separator nach einem der Ansprüche 1 bis 8, der ferner ein Substrat umfasst.

10. Eine wiederaufladbare Batterie, welche umfasst:

    eine ein Silbermaterial umfassende Kathode,
    eine ein Zinkmaterial umfassende Anode und
    einen Separator, der:

      ein ABS umfassendes Polymermaterial und
      ein Zirconiumoxidmaterial umfasst,

    wobei der Separator im Wesentlichen frei von Titan ist und mehr als 10 Gew.-% Zirconiumoxidmaterial enthält, wobei das Zirconiumoxidmaterial 1 Mol-% bis 10 Mol-% Yttriumoxid enthält.

11. Die Batterie nach Anspruch 10, wobei das Polymermaterial ferner 1 Gew.-% bis 30 Gew.-% eines wasserlöslichen Polymers umfasst, das Polyvinylpyrrolidon, Polyvinylalkohol, Polyacrylsäure, Carbopol, Polyethylenglykol, eine Polystyrolsulfonsäure oder irgendeine Kombination davon umfasst.

12. Die Batterie nach einem der Ansprüche 10 bis 11, wobei das Zirconiumoxidmaterial ein Pulver mit einem mittleren Korndurchmesser von größer als 30 nm umfasst.

13. Die Batterie nach einem der Ansprüche 10 bis 12, wobei der Separator ferner ein Dispergiermittel umfasst.

14. Die Batterie nach Anspruch 13, wobei der Separator 0,1 Gew.-% bis 9,99 Gew.-% Dispergiermittel umfasst.

15. Die Batterie nach Anspruch 14, wobei das Dispergiermittel Dodecylbenzolfulfonsäure oder ein Salz davon umfasst.

16. Die Batterie nach einem der Ansprüche 10 bis 15, wobei der Separator ferner ein Substrat umfasst und das Substrat

eine dünne Schicht aus einem Gewebe oder einem Nonwoven umfasst.

**Revendications**

1. Séparateur pour une utilisation dans une batterie, rechargeable, au zinc et à l'argent, ledit séparateur comprenant:

   d'un matériau polymère comprenant de l'ABS;
   d'une charge comprenant un matériau à base d'oxyde de zirconium,

   où le séparateur est pratiquement exempt de titane et a une résistivité non supérieure à 2000 ohms•cm,
   où le matériau à base d'oxyde de zirconium comprend de 1 % en moles à 10 % en moles d'oxyde d'yttrium.

2. Séparateur selon la revendication 1, où ledit séparateur a une taille de pores d'environ 5 nm ou plus.

3. Séparateur selon l'une ou l'autre des revendications 1 ou 2, dans lequel le matériau polymère comprend en outre d'environ 1 % en poids à environ 30 % en poids d'un polymère soluble dans l'eau, ledit polymère comprenant de polyvinylpyrrolidone, d'alcool polyvinylique, d'acide polyacrylique, de carbopol, de polyéthylène glycol, d'acide sulfonique de polystyrène ou de n'importe quelle combinaison de ces polymères.

4. Séparateur selon l'une quelconque des revendications 1 à 3, comprenant en outre plus d'environ 10 % en poids de charge.

5. Séparateur selon l'une quelconque des revendications 1 à 4, dans lequel le matériau à base d'oxyde de zirconium comprend une poudre ayant un diamètre de grain moyen supérieur à 30 nm.

6. Séparateur selon l'une quelconque des revendications 1 à 5, comprenant en outre un dispersant.

7. Séparateur selon la revendication 6, comprenant en outre d'environ 0,1 % en poids à environ 9,99 % en poids d'un dispersant.

8. Séparateur selon l'une ou l'autre des revendications 6 ou 7, dans lequel le dispersant comprend de l'acide dodécylbenzènesulfonique ou n'importe quel sel dudit acide.

9. Séparateur selon l'une quelconque des revendications 1 à 8, comprenant en outre d'un substrat.

10. Batterie rechargeable comprenant:

    une cathode comprenant d'un matériau à base d'argent;
    une anode comprenant d'un matériau à base de zinc; et
    un séparateur comprenant:

      d'un matériau polymère comprenant de l'ABS; et
      d'un matériau à base d'oxyde de zirconium,

    où le séparateur est pratiquement exempt de titane et comprend plus de 10 % en poids d'un matériau à base d'oxyde de zirconium,
    où le matériau à base d'oxyde de zirconium comprend de 1 % en moles à 10 % en moles d'oxyde d'yttrium.

11. Batterie selon la revendication 10, dans laquelle le matériau polymère comprend en outre de 1 % en poids à 30 % en poids d'un polymère soluble dans l'eau, ledit polymère comprenant de polyvinylpyrrolidone, d'alcool polyvinylique, d'acide polyacrylique, de carbopol, de polyéthylène glycol, d'un acide sulfonique de polystyrène ou bien de n'importe quelle combinaison de ces polymères.

12. Batterie selon l'une des revendications 10 ou 11, dans laquelle le matériau à base d'oxyde de zirconium comprend une poudre ayant un diamètre de grain moyen supérieur à 30 nm.

13. Batterie selon l'une quelconque des revendications 10 à 12, dans laquelle le séparateur comprend en outre un

dispersant.

**14.** Batterie selon la revendication 13, dans laquelle le séparateur comprend en outre de 0,1 % en poids à 9,99 % en poids d'un dispersant.

**15.** Batterie selon la revendication 14, dans laquelle le dispersant comprend de l'acide dodécylbenzènesulfonique ou n'importe quel sel dudit acide.

**16.** Batterie selon l'une quelconque des revendications 10 à 15, dans laquelle le séparateur comprend en outre d'un substrat et le substrat se compose d'un film tissé ou non tissé.

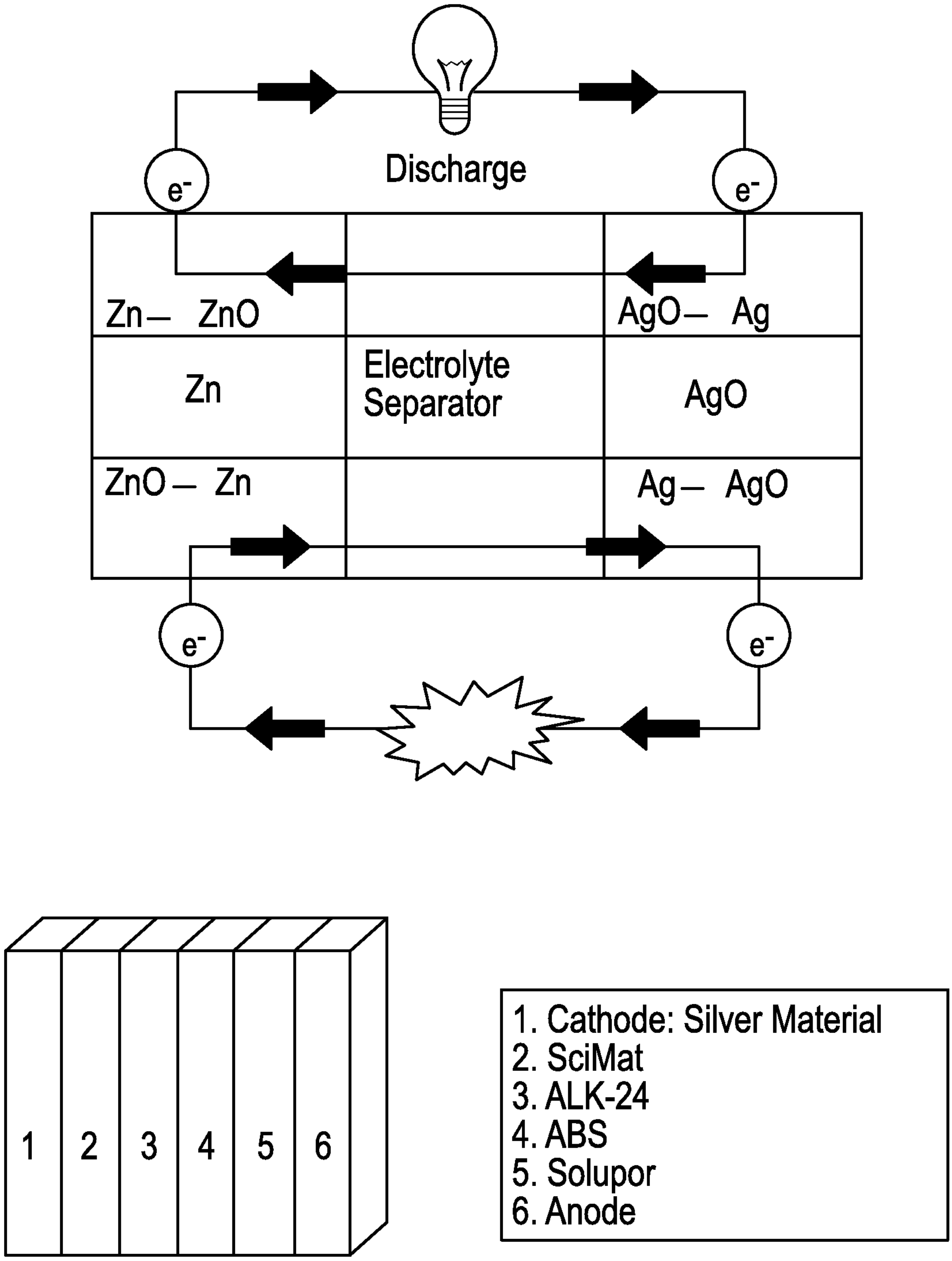
Discharge
e-
e-
Zn— ZnO
AgO— Ag
Zn
Electrolyte
Separator
AgO
ZnO— Zn
Ag— AgO
e-
e-
1
2
3
4
5
6
1. Cathode: Silver Material
2. SciMat
3. ALK-24
4. ABS
5. Solupor
6. Anode

*FIG. 1*

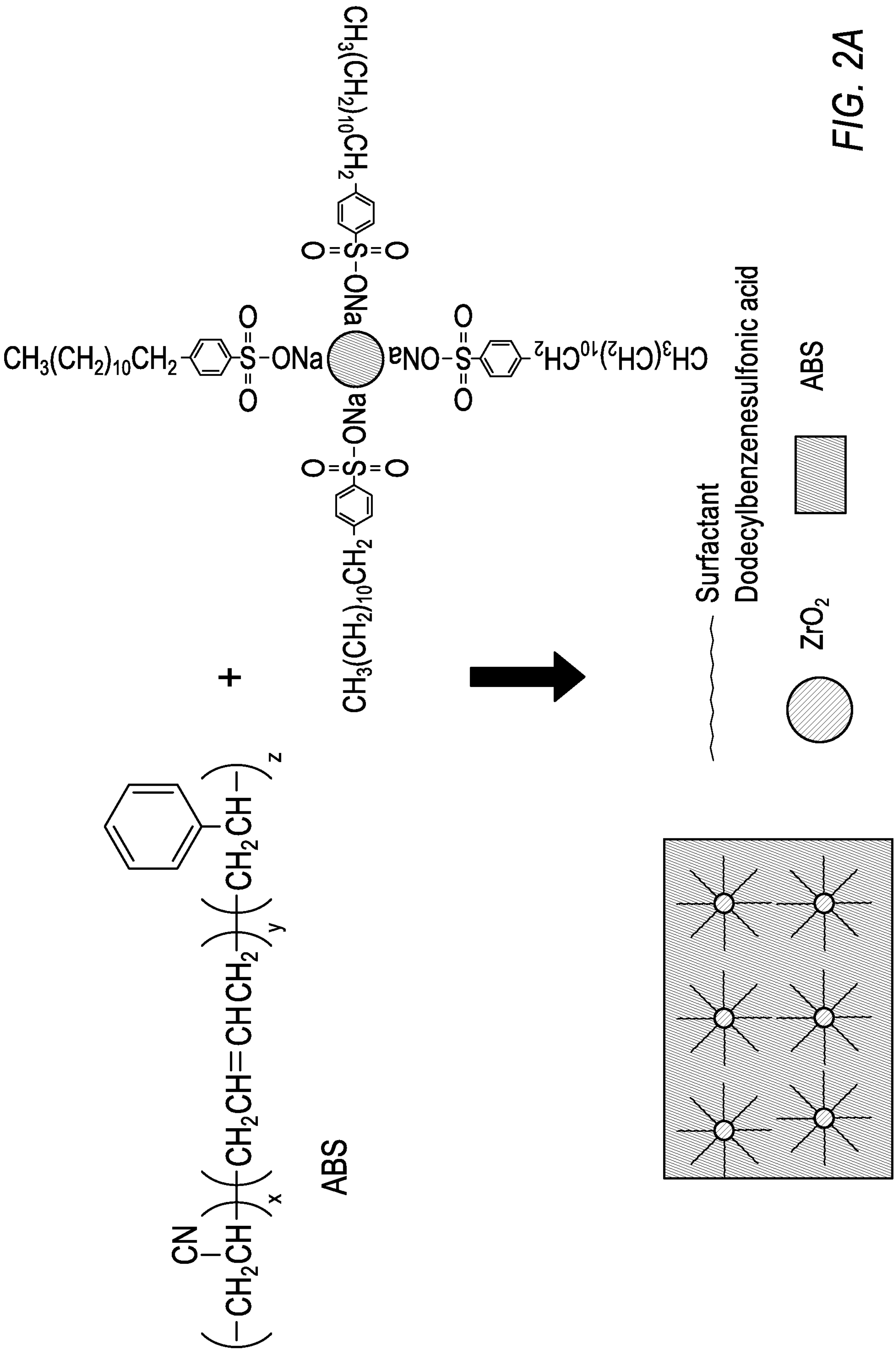


*FIG. 2A*

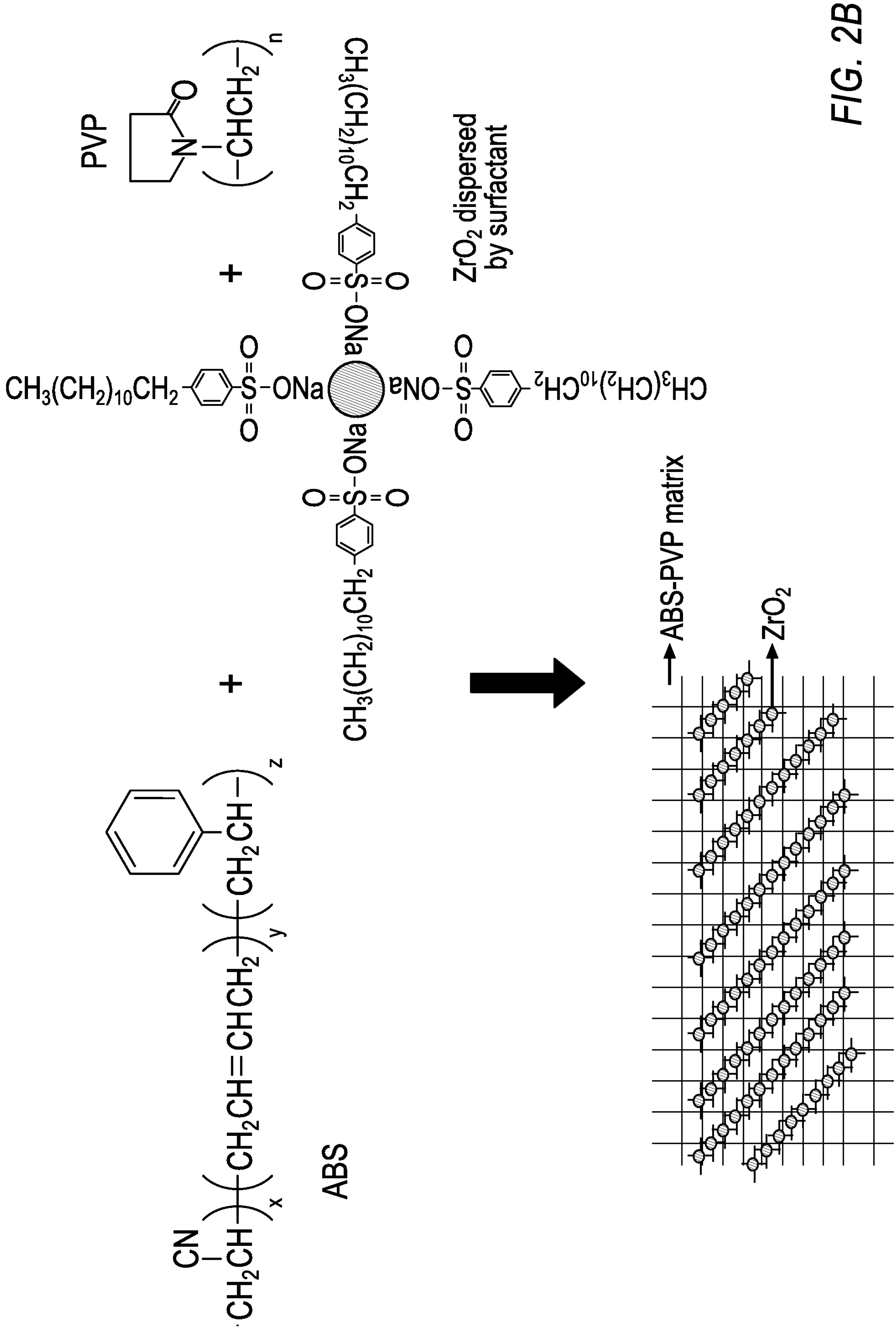


FIG. 2B

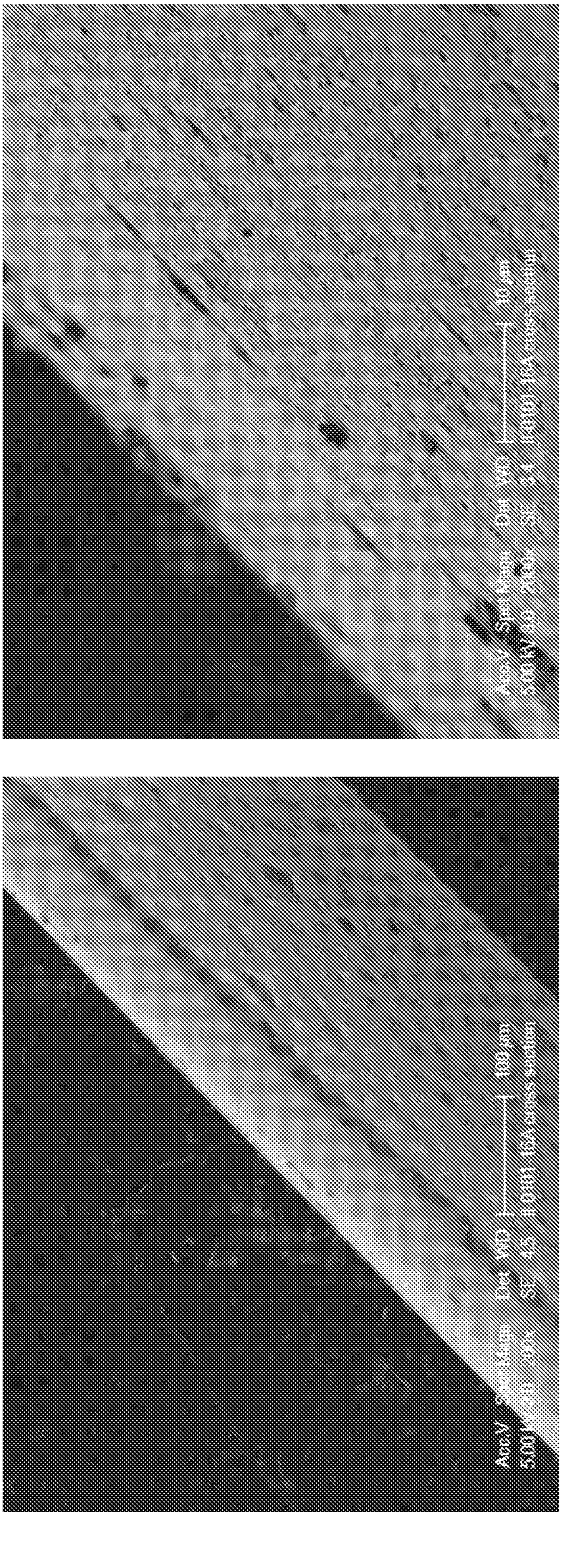

FIG. 3

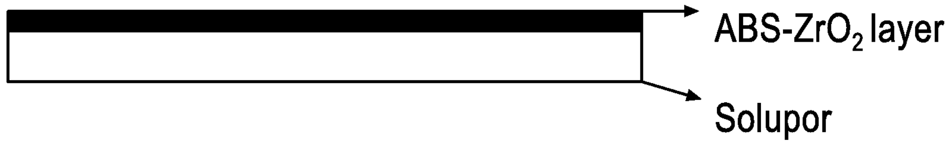
ABS-$ZrO_2$ layer
Solupor

*FIG. 4A*

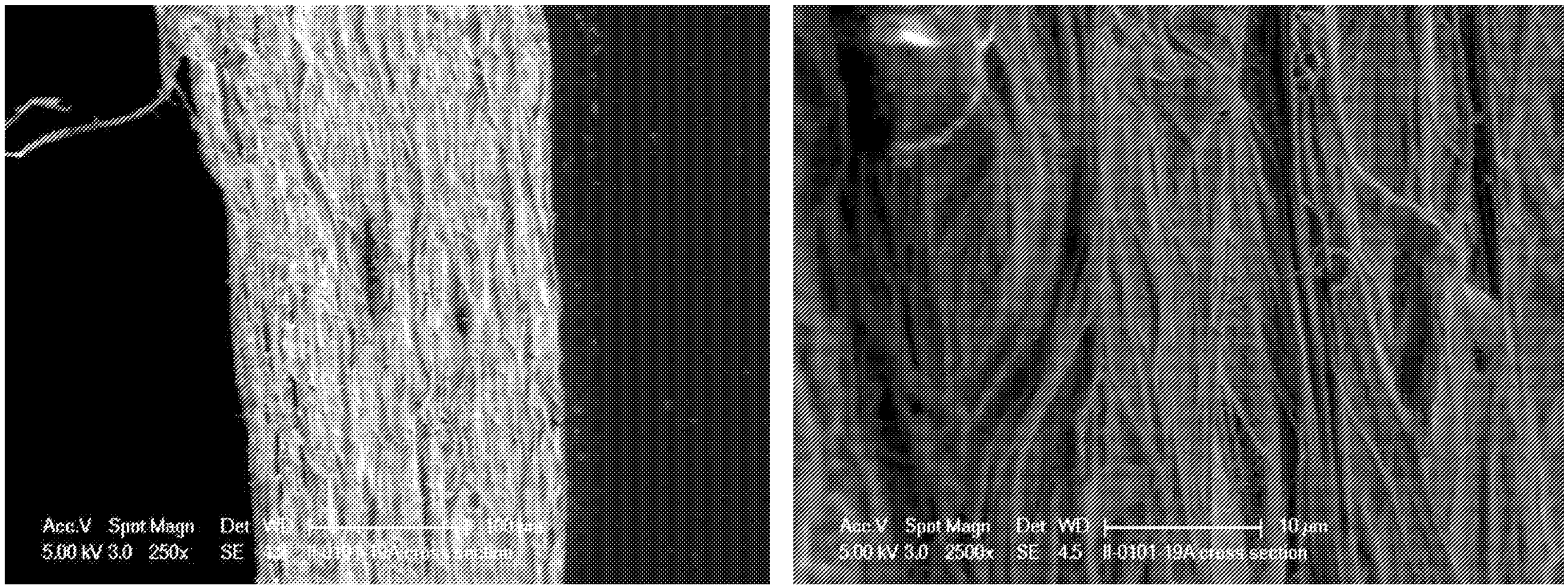
Acc.V Spot Magn Det WD
5.00 kV 3.0 250x SE
Acc.V Spot Magn Det WD 10 μm
5.00 kV 3.0 2500x SE 4.5 II-0101 19A cross section

*FIG. 4B*

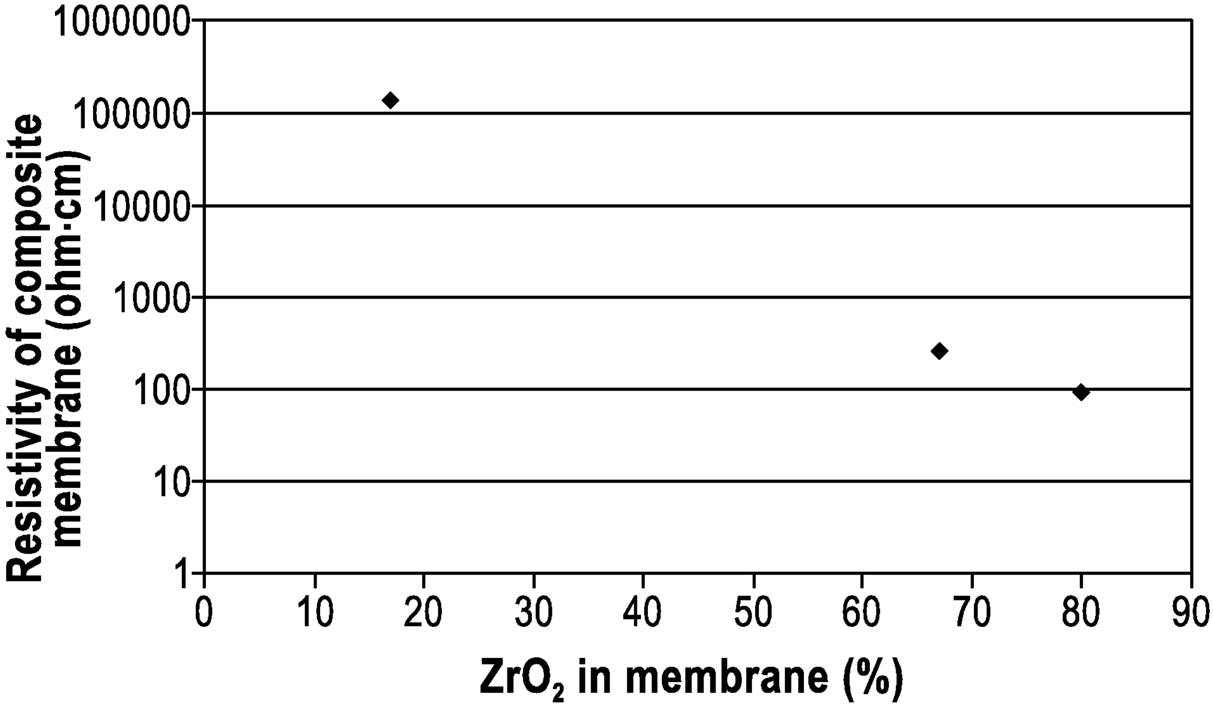
1000000
100000
10000
1000
100
10
1
0
10
20
30
40
50
60
70
80
90
Resistivity of composite membrane (ohm·cm)
$ZrO_2$ in membrane (%)

*FIG. 5*

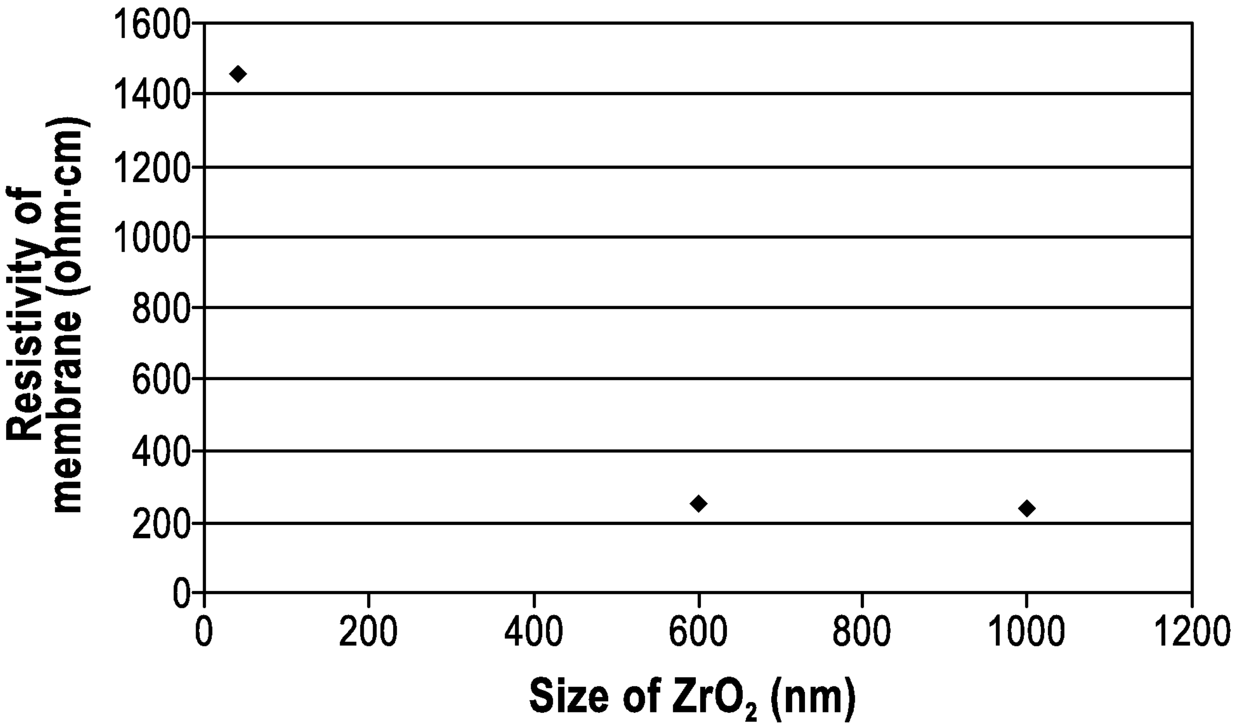
1600
1400
1200
1000
800
600
400
200
0
0
200
400
600
800
1000
1200
Resistivity of membrane (ohm·cm)
Size of $ZrO_2$ (nm)

*FIG. 6*

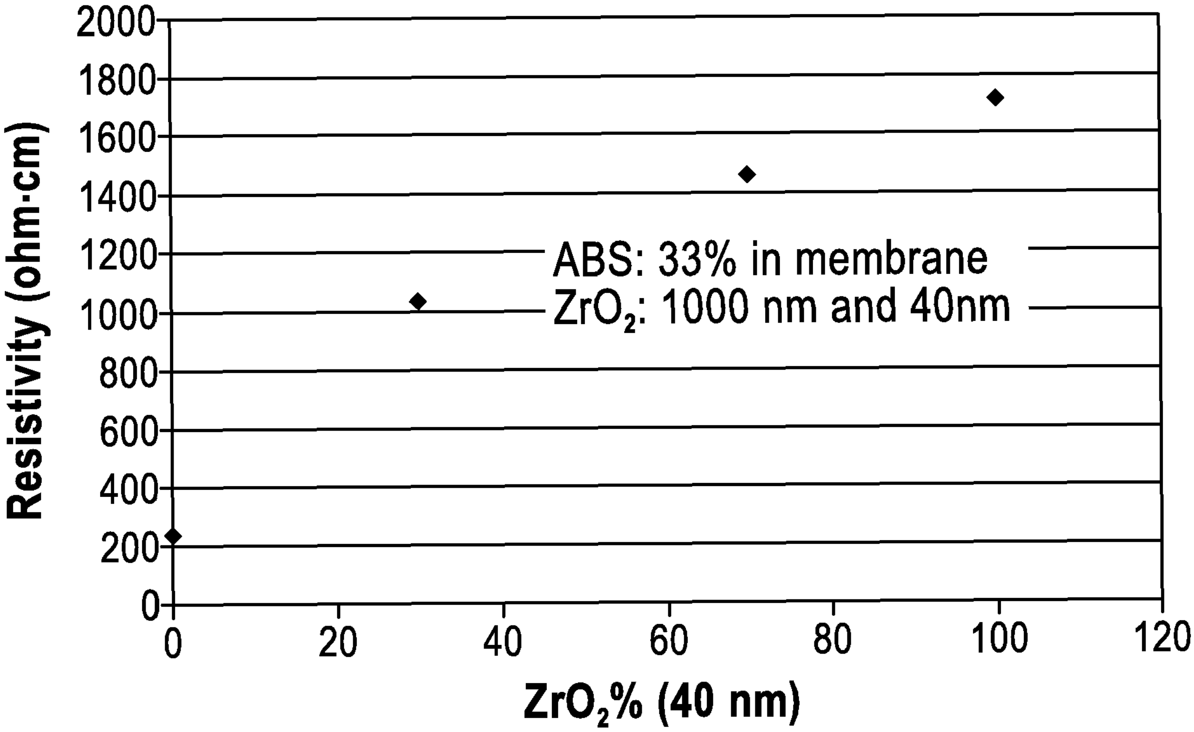
2000
1800
1600
1400
1200
1000
800
600
400
200
0
Resistivity (ohm·cm)
ABS: 33% in membrane
ZrO2: 1000 nm and 40nm
0
20
40
60
80
100
120
ZrO2% (40 nm)

*FIG. 7*

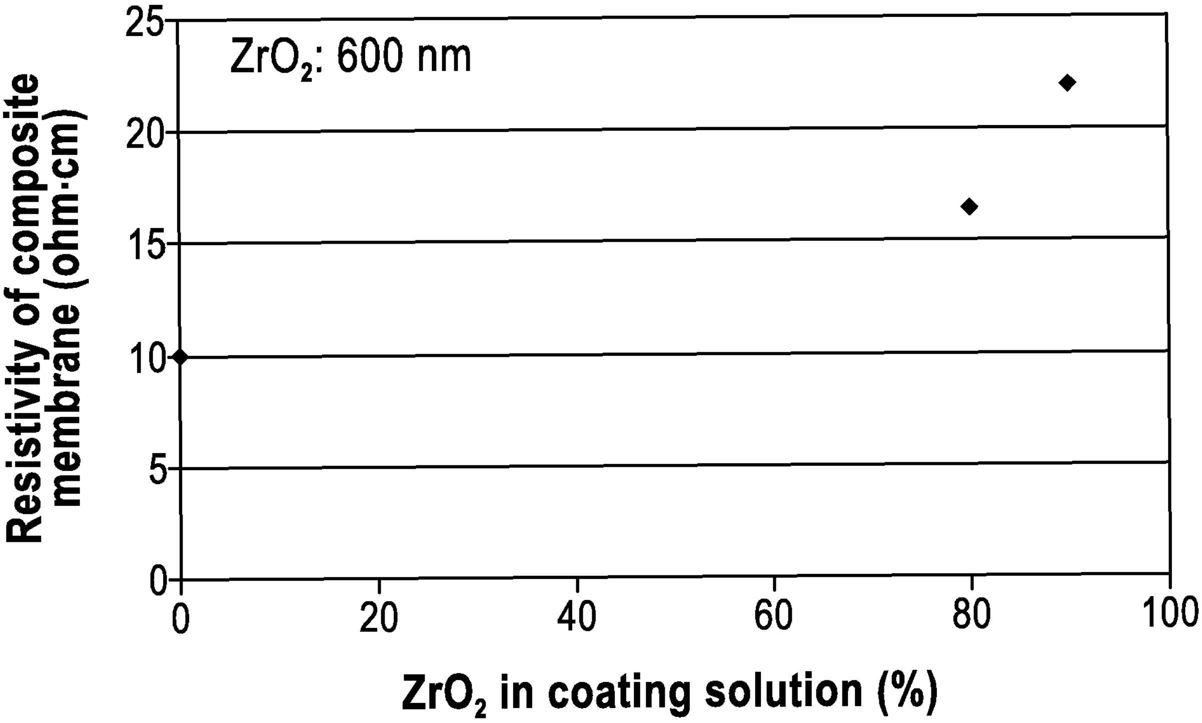
25
20
15
10
5
0
Resistivity of composite membrane (ohm·cm)
ZrO2: 600 nm
0
20
40
60
80
100
ZrO2 in coating solution (%)

*FIG. 8*

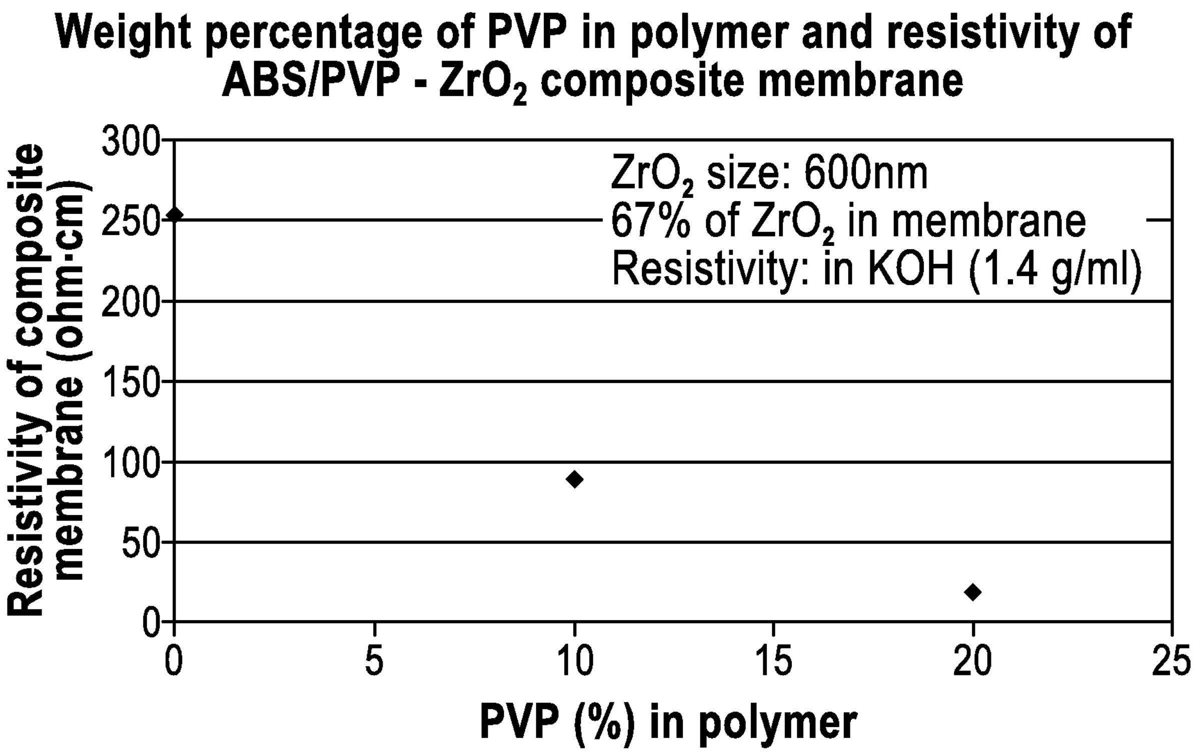
Weight percentage of PVP in polymer and resistivity of ABS/PVP - ZrO2 composite membrane
Resistivity of composite membrane (ohm·cm)
300
250
200
150
100
50
0
0
5
10
15
20
25
PVP (%) in polymer
ZrO2 size: 600nm
67% of ZrO2 in membrane
Resistivity: in KOH (1.4 g/ml)

*FIG. 9*

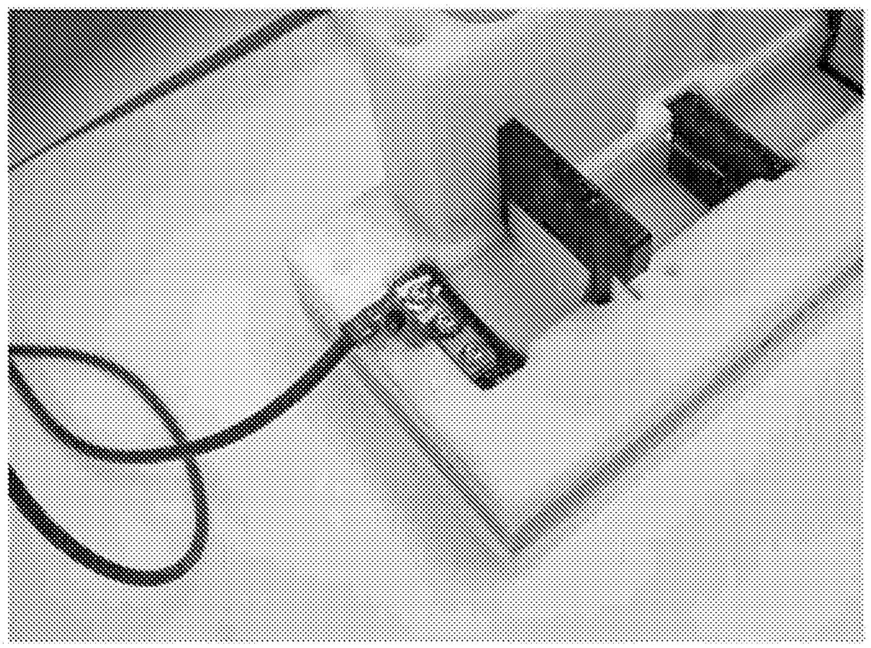

FIG. 10a

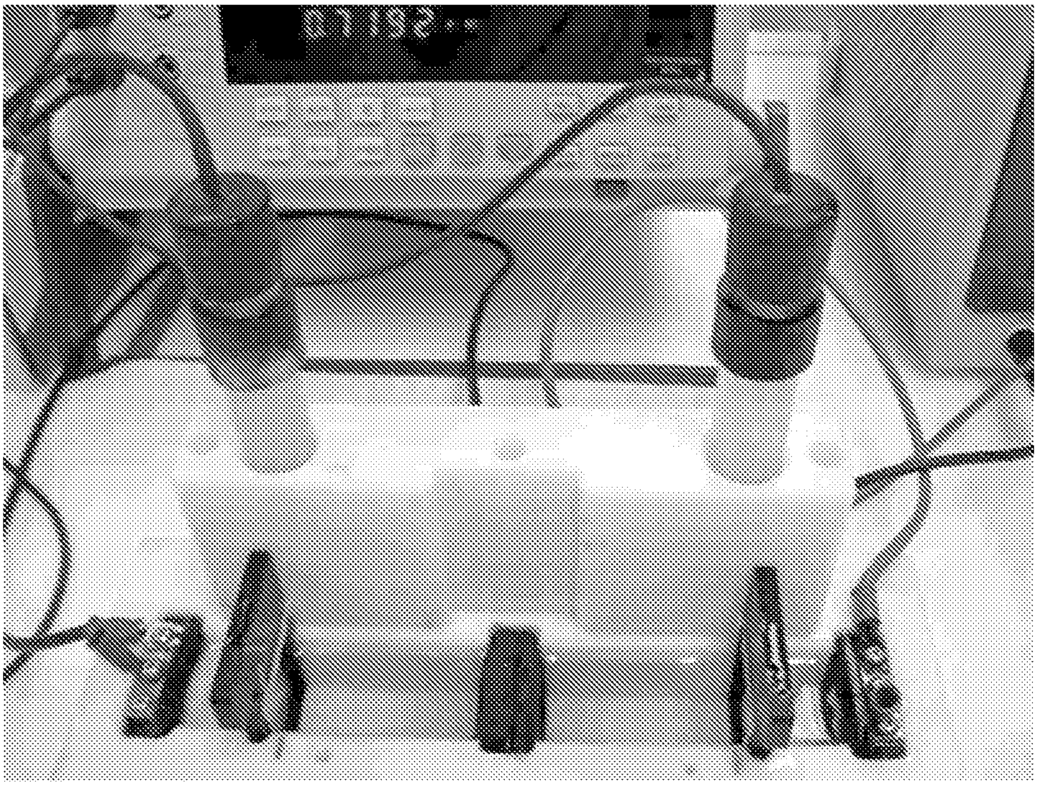

FIG. 10b

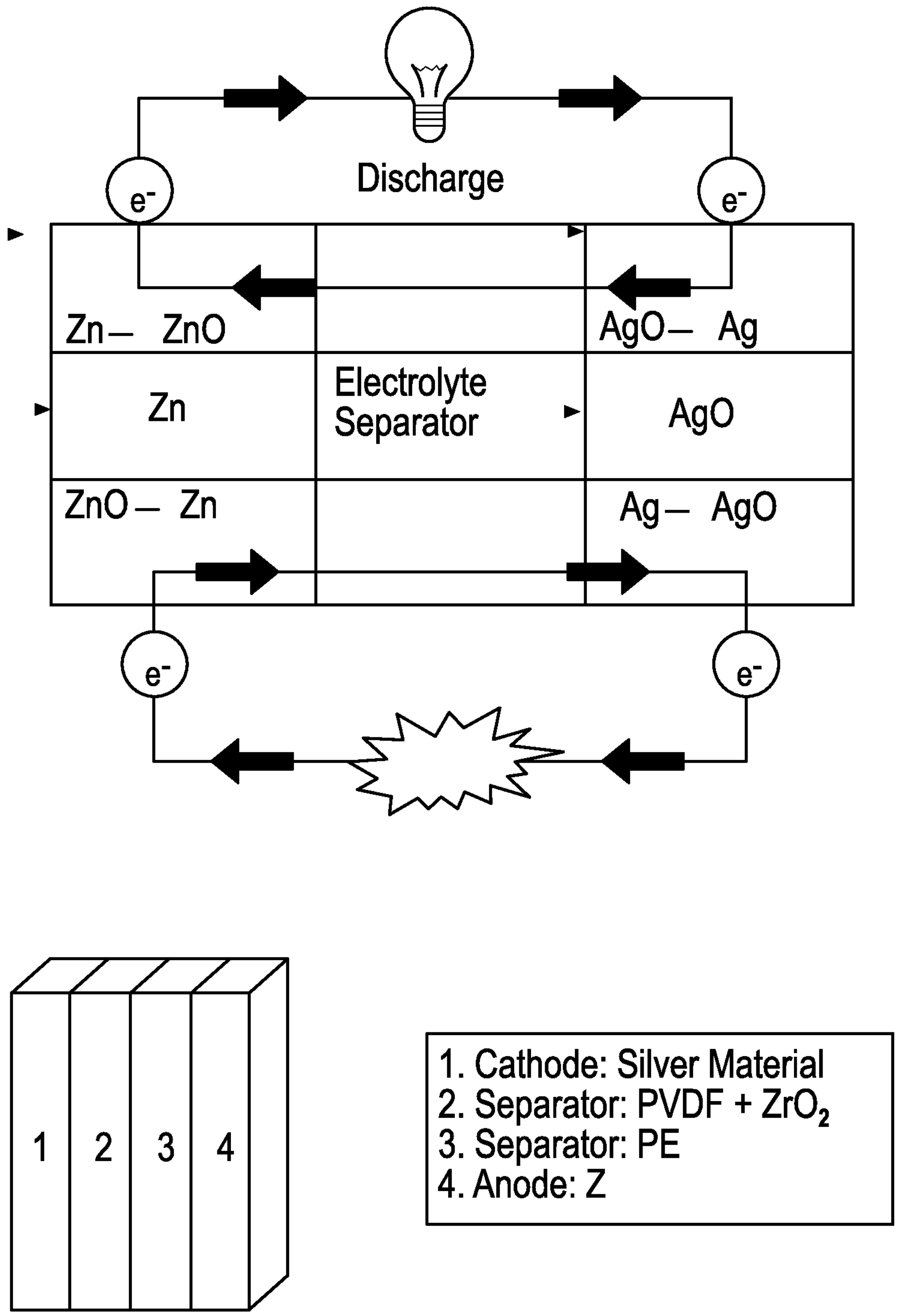
Discharge
e-
e-
Zn— ZnO
AgO— Ag
Zn
Electrolyte Separator
AgO
ZnO— Zn
Ag— AgO
e-
e-
1
2
3
4
1. Cathode: Silver Material
2. Separator: PVDF + ZrO2
3. Separator: PE
4. Anode: Z

*FIG. 11*

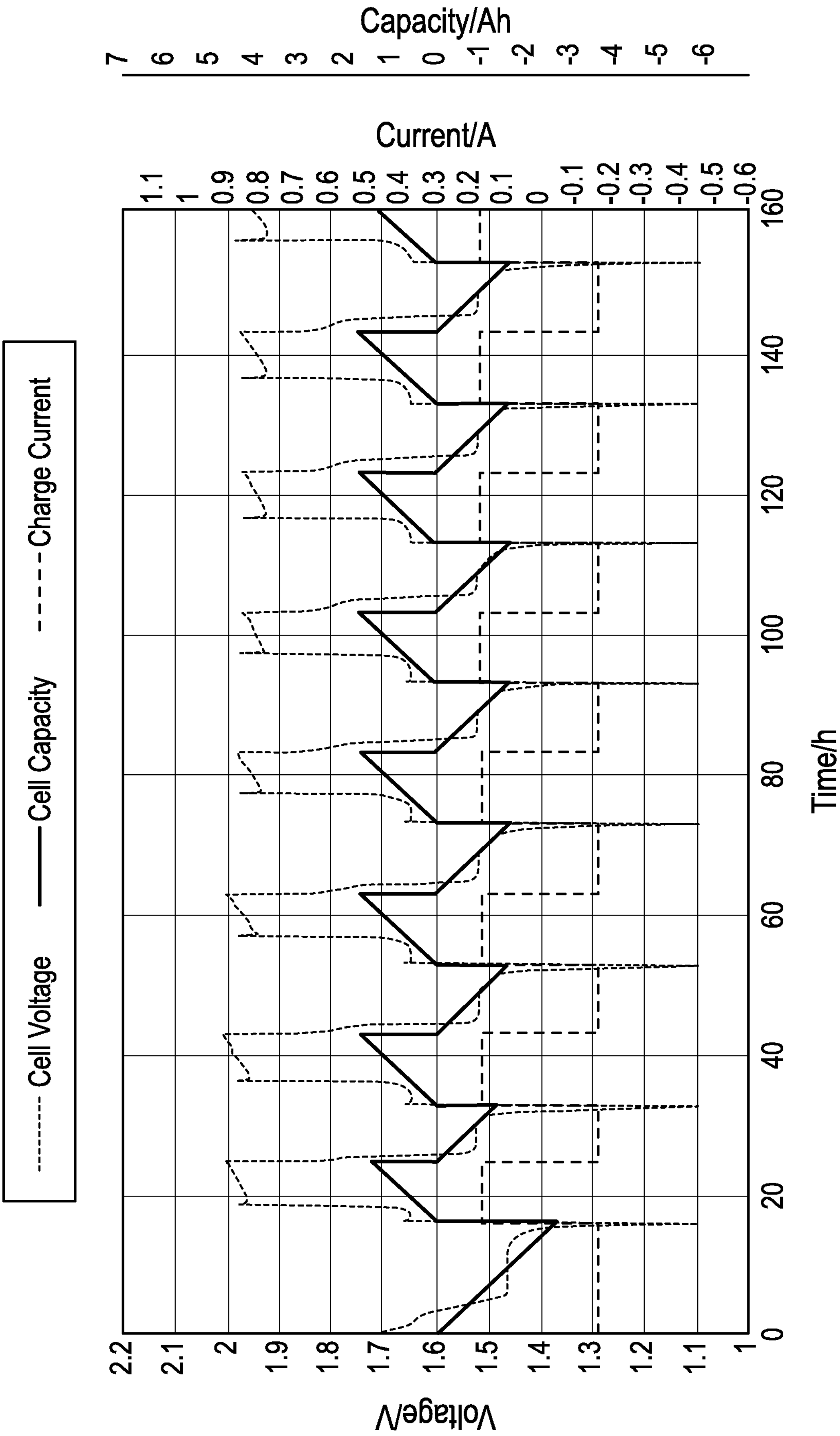
Cell Voltage
Cell Capacity
Charge Current
Capacity/Ah
Current/A
Voltage/V
Time/h

FIG. 12

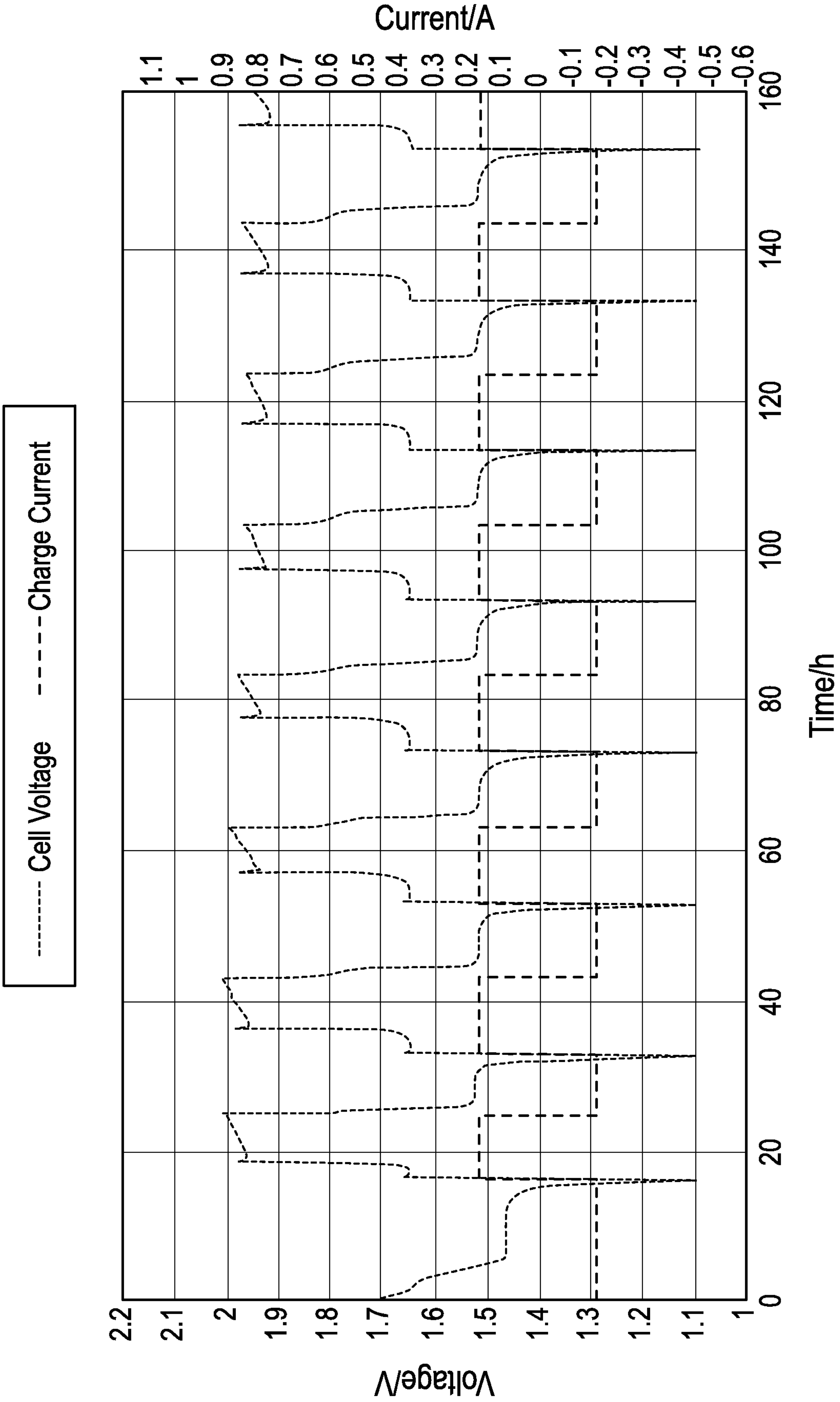
Cell Voltage
Charge Current
Current/A
1.1
1
0.9
0.8
0.7
0.6
0.5
0.4
0.3
0.2
0.1
0
-0.1
-0.2
-0.3
-0.4
-0.5
-0.6
Voltage/V
2.2
2.1
2
1.9
1.8
1.7
1.6
1.5
1.4
1.3
1.2
1.1
1
Time/h
0
20
40
60
80
100
120
140
160

FIG. 13

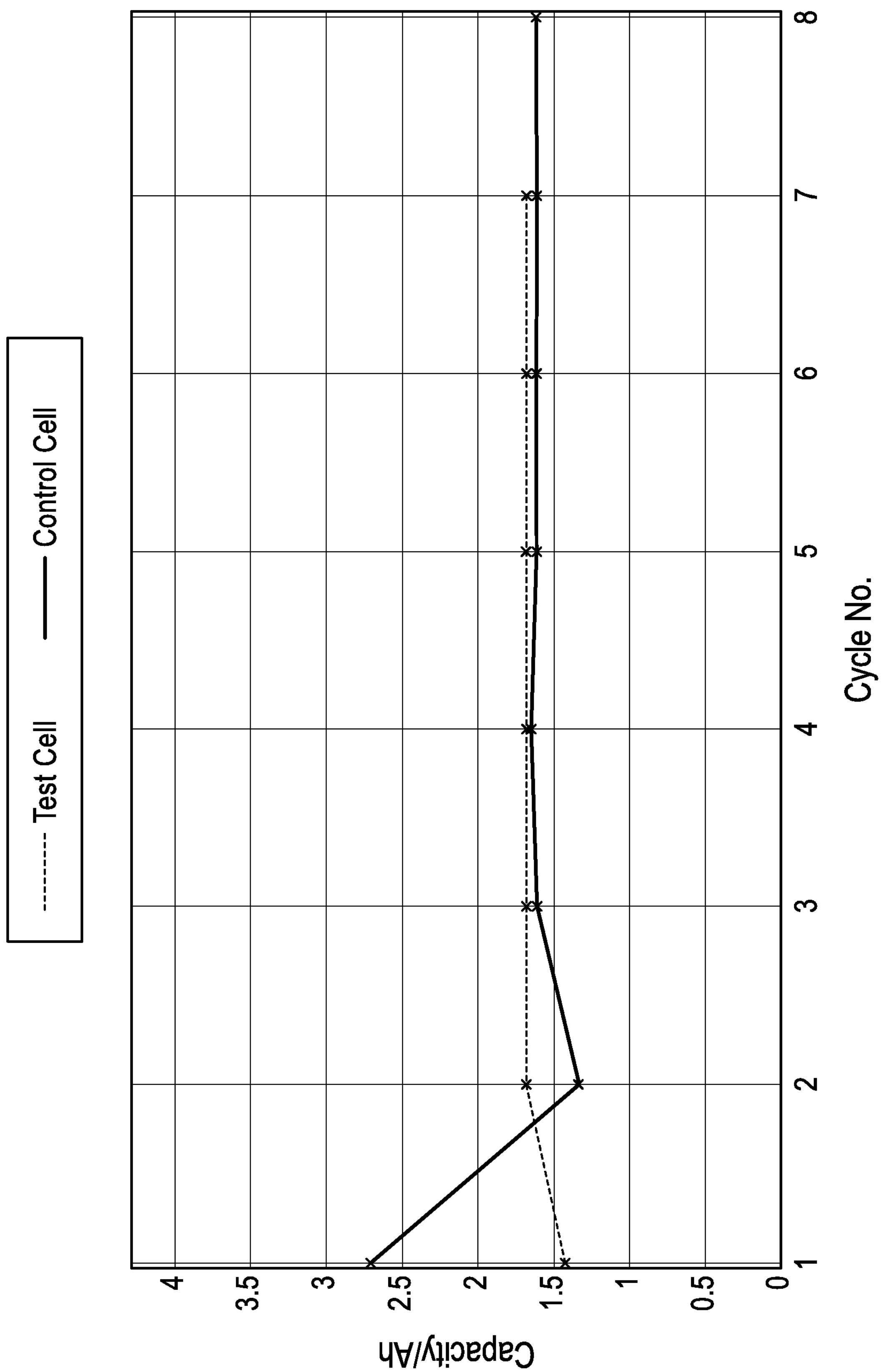
Test Cell
Control Cell
Capacity/Ah
0
0.5
1
1.5
2
2.5
3
3.5
4
Cycle No.
1
2
3
4
5
6
7
8

*FIG. 14*

FIG. 15A

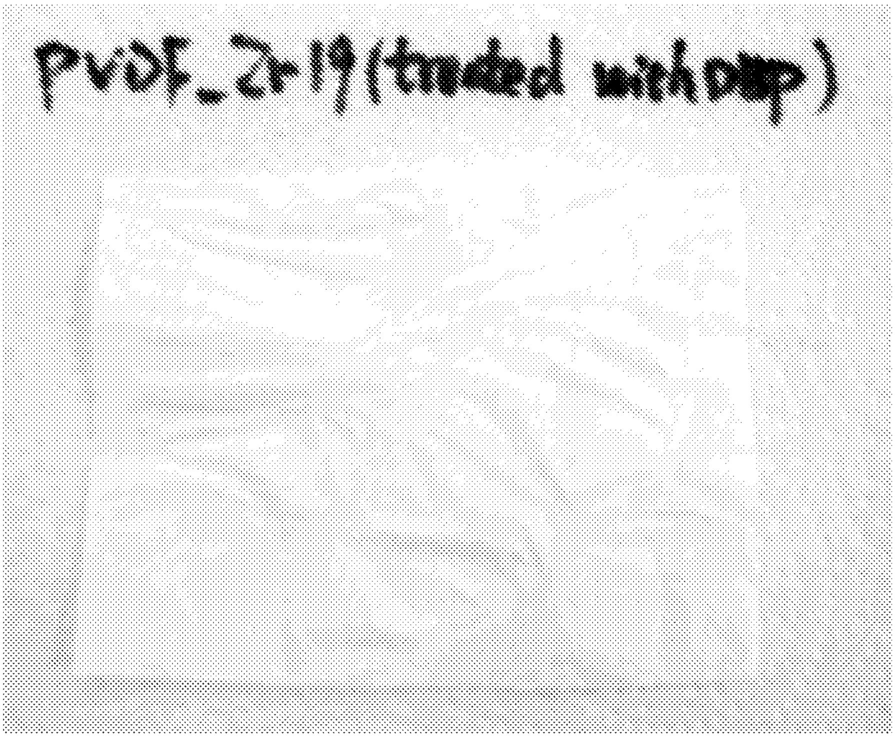


FIG. 15B

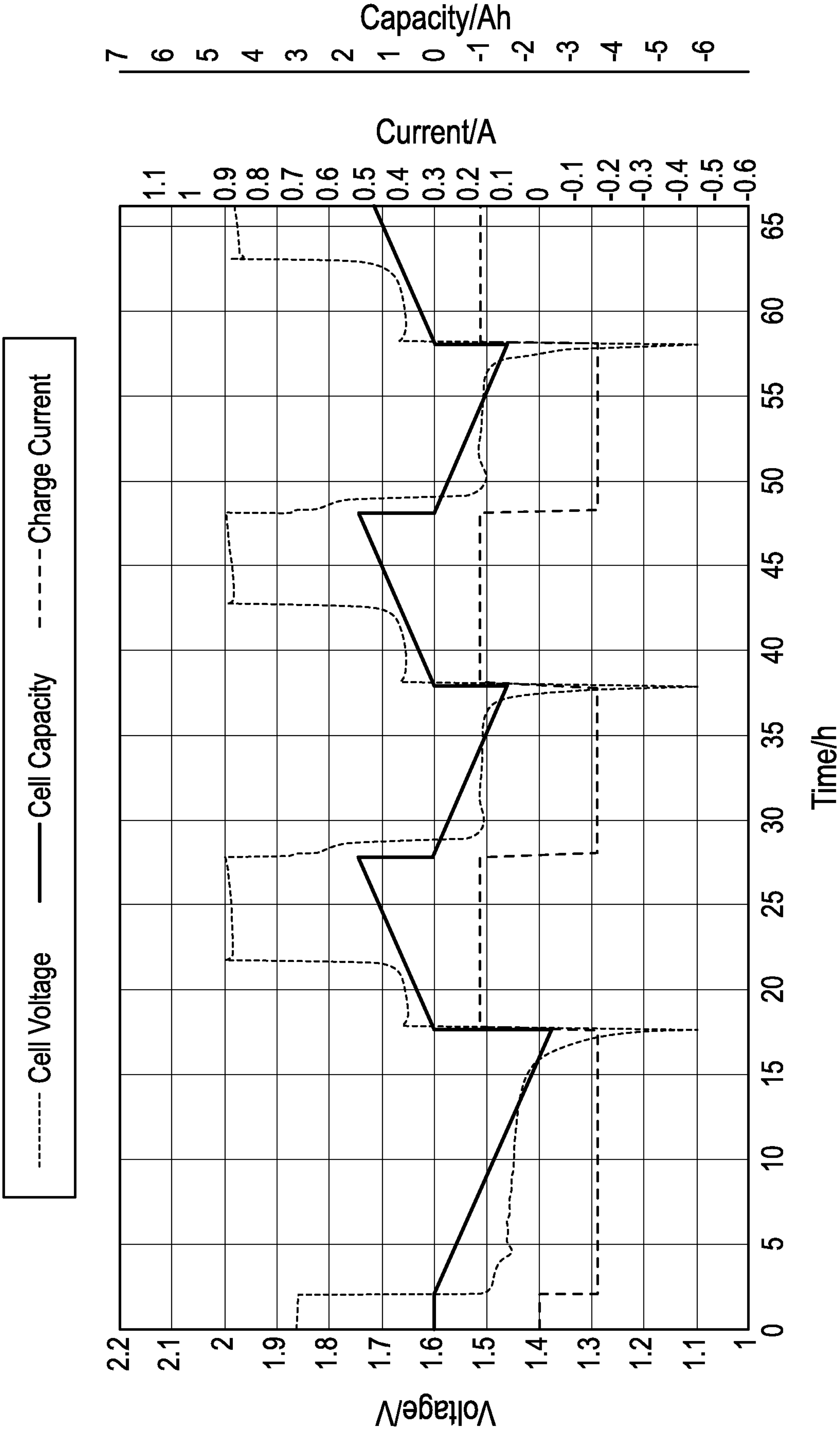
Cell Voltage
Cell Capacity
Charge Current
Capacity/Ah
7 6 5 4 3 2 1 0 -1 -2 -3 -4 -5 -6
Current/A
1.1 1 0.9 0.8 0.7 0.6 0.5 0.4 0.3 0.2 0.1 0 -0.1 -0.2 -0.3 -0.4 -0.5 -0.6
Voltage/V
2.2 2.1 2 1.9 1.8 1.7 1.6 1.5 1.4 1.3 1.2 1.1 1
Time/h
0 5 10 15 20 25 30 35 40 45 50 55 60 65

*FIG. 16*

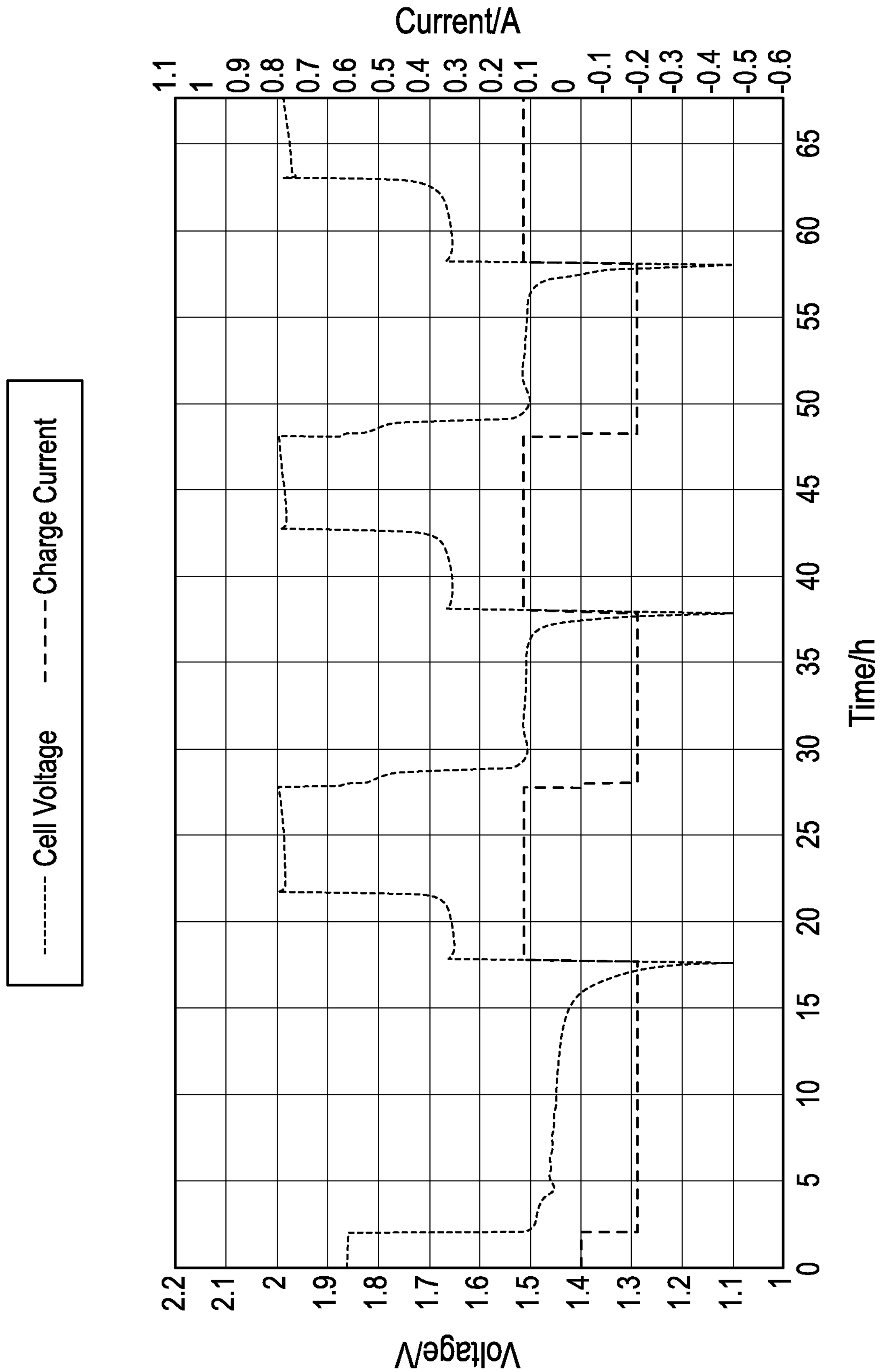
Cell Voltage
Charge Current
Current/A
1.1 1 0.9 0.8 0.7 0.6 0.5 0.4 0.3 0.2 0.1 0 -0.1 -0.2 -0.3 -0.4 -0.5 -0.6
Voltage/V
2.2 2.1 2 1.9 1.8 1.7 1.6 1.5 1.4 1.3 1.2 1.1 1
Time/h
0 5 10 15 20 25 30 35 40 45 50 55 60 65

*FIG. 17*

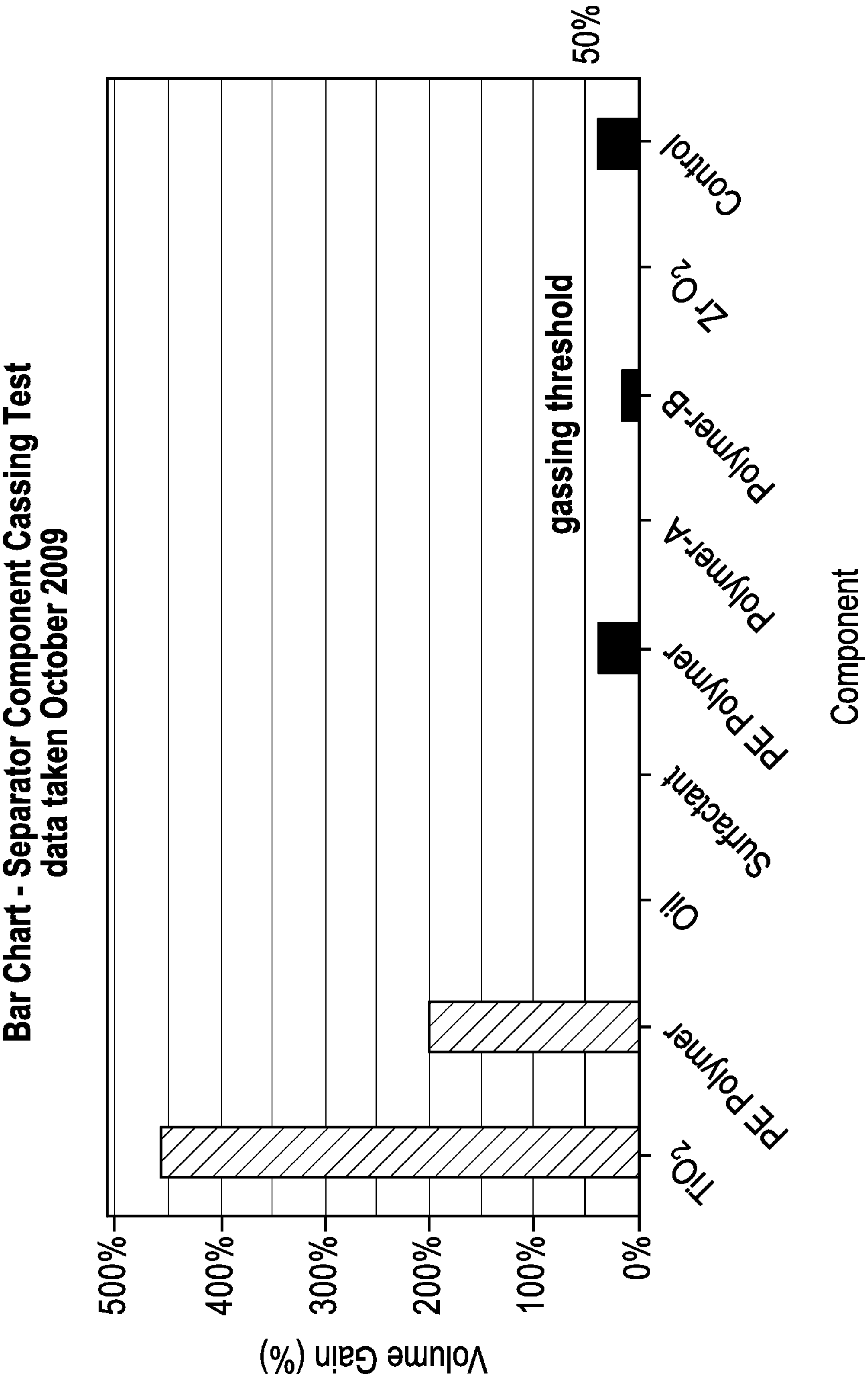
Bar Chart - Separator Component Cassing Test
data taken October 2009
Volume Gain (%)
500%
400%
300%
200%
100%
0%
50%
gassing threshold
TiO$_2$
PE Polymer
Oil
Surfactant
PE Polymer
Polymer-A
Polymer-B
Zr O$_2$
Control
Component

FIG. 18

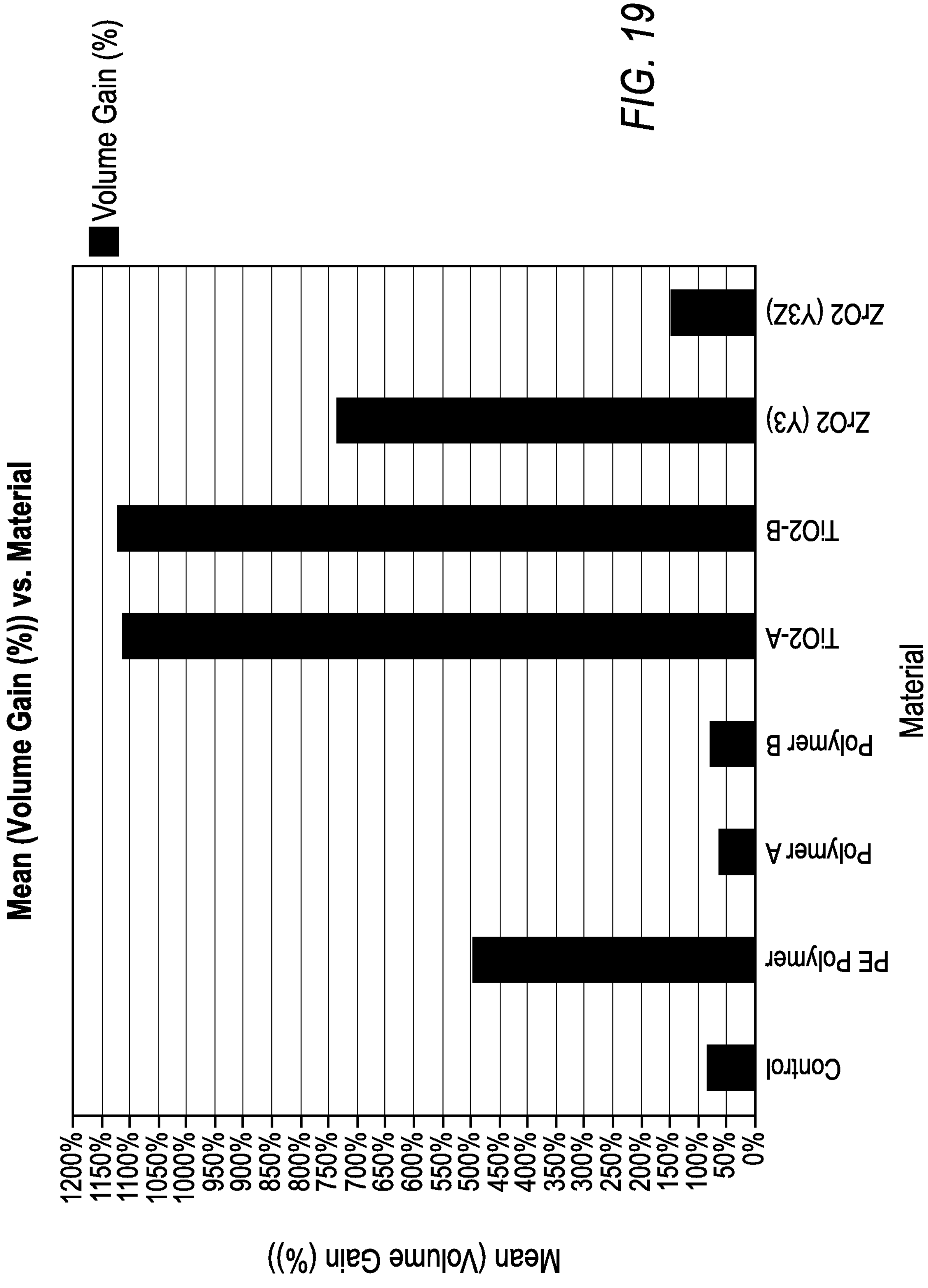
Mean (Volume Gain (%)) vs. Material
Volume Gain (%)
Mean (Volume Gain (%))
1200%
1150%
1100%
1050%
1000%
950%
900%
850%
800%
750%
700%
650%
600%
550%
500%
450%
400%
350%
300%
250%
200%
150%
100%
50%
0%
Control
PE Polymer
Polymer A
Polymer B
TiO2-A
TiO2-B
ZrO2 (Y3)
ZrO2 (Y3Z)
Material

FIG. 19

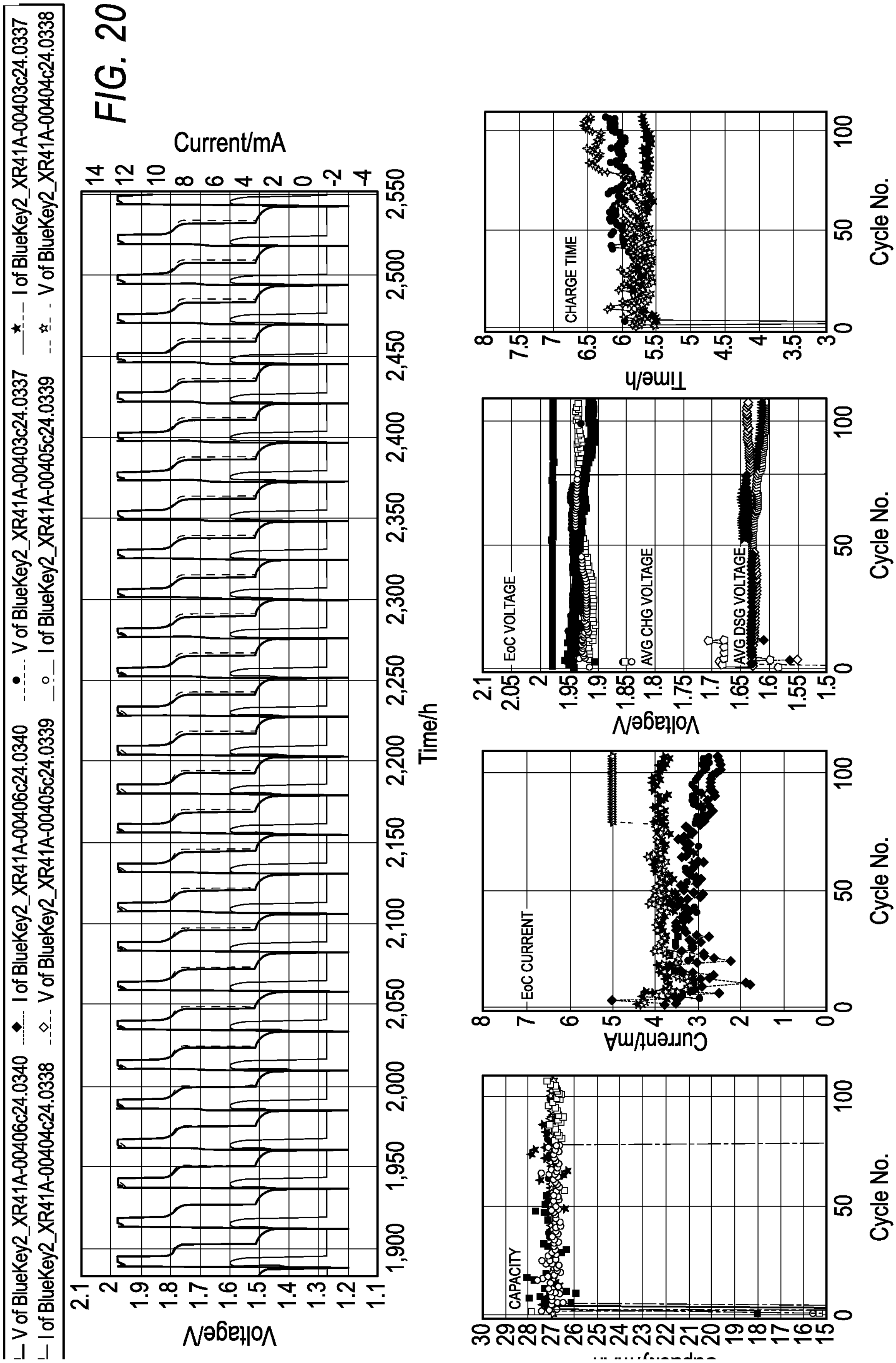
V of BlueKey2_XR41A-00406c24.0340
I of BlueKey2_XR41A-00406c24.0340
V of BlueKey2_XR41A-00403c24.0337
I of BlueKey2_XR41A-00403c24.0337
I of BlueKey2_XR41A-00404c24.0338
V of BlueKey2_XR41A-00405c24.0339
I of BlueKey2_XR41A-00405c24.0339
V of BlueKey2_XR41A-00404c24.0338
Voltage/V
Current/mA
Time/h
CAPACITY
EoC CURRENT
EoC VOLTAGE
AVG CHG VOLTAGE
AVG DSG VOLTAGE
CHARGE TIME
Current/mA
Voltage/V
Time/h
Cycle No.

FIG. 20

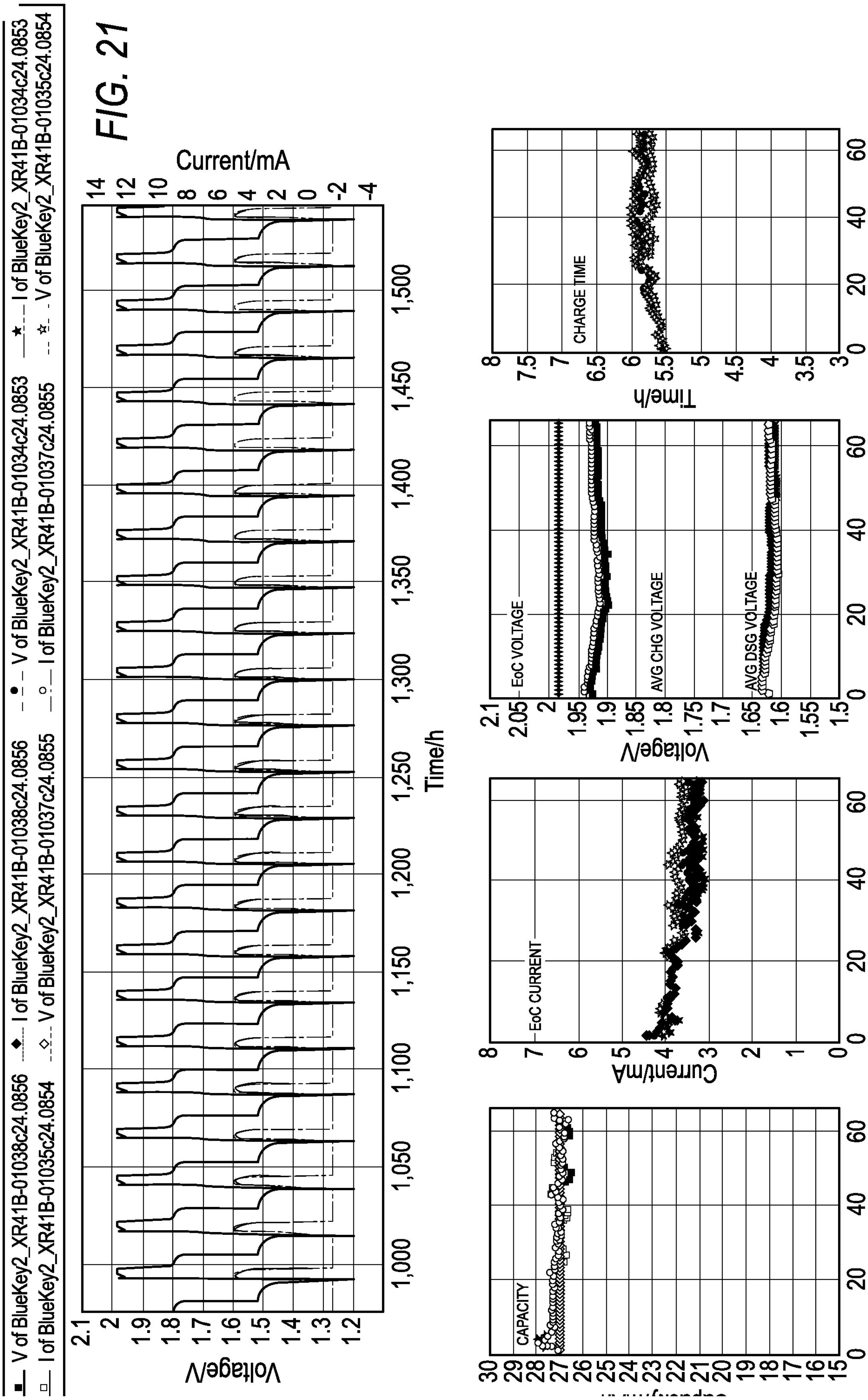
V of BlueKey2_XR41B-01038c24.0856
I of BlueKey2_XR41B-01038c24.0856
V of BlueKey2_XR41B-01034c24.0853
I of BlueKey2_XR41B-01034c24.0853
I of BlueKey2_XR41B-01035c24.0854
V of BlueKey2_XR41B-01037c24.0855
I of BlueKey2_XR41B-01037c24.0855
V of BlueKey2_XR41B-01035c24.0854
Voltage/V
Current/mA
Time/h
CAPACITY
Cycle No.
EoC CURRENT
Current/mA
EoC VOLTAGE
AVG CHG VOLTAGE
AVG DSG VOLTAGE
Voltage/V
CHARGE TIME
Time/h

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008039417 A1
- WO 2009120382 A1
- US 20060046149 A1